# EUROPEAN PATENT APPLICATION

(11) **EP 2 397 526 A1**
(43) Date of publication of application: **21.12.2011**
(21) Application number: 11168918.8
(22) Date of filing: 07.06.2011
(51) Int. Cl.: C09D 11/00, C09D 11/10

(54) **Ink set and image forming method**

(30) Priority: 17.06.2010 JP 2010138430
(71) Applicant: FUJIFILM Corporation, Tokyo (JP)
(72) Inventor: Sasada, Misato, Kanagawa (JP); Inushima, Reiko, Kanagawa (JP)
(74) Representative: HOFFMANN EITLE

(57) **Abstract**

The present invention provides an ink set including: an ink composition including a pigment coated with a water-insoluble polymer; a water-soluble polymer having a hydrophobic structural unit (A), a structural unit (B) containing an anionic group, and a structural unit (C) containing a basic aliphatic group or a basic aromatic group; a water-soluble Polymerizable compound; and water; and a treatment liquid including an aggregating agent which forms an aggregate by contact with the ink composition, and an image forming method using the ink set.

## Description

### BACKGROUND OF THE INVENTION

### Field of the Invention

The present invention relates to an ink set and an image forming method.

### Description of Prior Art

An inkjet recording method performs recording by respectively ejecting ink droplets from a large number of nozzles formed on an inkjet head toward a recording medium, followed by fixing the ink on the recording medium. Generally, inks used for the inkjet recording method contain water as a main component, as well as a coloring component and an organic solvent. In order to obtain high grade images, an ink which further contains various components has been proposed.

For example, an ink containing an amphoteric polymer having an anionic group and a cationic group has been proposed (see, for example, Japanese Patent Application Laid-Open No. 8-333538), and by which it is said that a high-quality image in which bleeding is suppressed and which has a high image density and excellent water resistance can be obtained.
Further, a photo-curable ink containing a water-soluble polymerizable oligomer has been proposed (see, for example, Japanese Patent No. 3576862), and by which it is said that a high-quality image having excellent rub resistance and the like can be formed.

Moreover, for the purpose of achieving high speed aggregation of ink, an ink set including an ink composition containing two types of water-insoluble fine particles and a treatment liquid has been proposed (see, for example, JP-A No. 2009-13394).

However, in inkjet recording using the ink described in JP-A No. 8-333538 and Japanese Patent No. 3576862, there are cases in which sufficient performance is not obtained in terms of color forming density, fixing property (aggregation property) of ink, resolution of images, or the like. These defects become remarkable in the case of high speed image recording. Particularly, it is a significant problem that the fixing property (aggregation property) of ink is insufficient in the relevant art where a single pass system is becoming a main current in place of a shuttle scan system in order to achieve a higher recording speed. Further, the ejection stability of the inks described in JP-A No. 8-333538 and Japanese Patent No. 3576862 is insufficient.
Moreover, in inkjet recording using the ink set described in JP-A No. 2009-13394, fixing property (aggregation property) of ink tends to be influenced by the thermal properties of the water-insoluble fine particles contained in the ink composition. Therefore, when heating and fixing treatment is performed at a temperature lower than the softening temperature of the water-insoluble fine particles, there are cases in which rub resistance of an image is insufficient.

The invention has been made in view of the above circumstances, and an object of the invention is to provide an ink set, with which an image having excellent image forming characteristics and excellent rub resistance can be formed and which exhibits excellent ejection reliability, even when the image is formed at a high speed, in a case in which an image is formed on a recording medium by ink-jetting, and an image forming method. An aim of the invention is to achieve this object.

### SUMMARY OF THE INVENTION

A first aspect of the invention provides an ink set including: an ink composition including a pigment coated with a water-insoluble polymer; a water-soluble polymer having a hydrophobic structural unit(A), a structural unit (B) containing an anionic group, and a structural unit (C) containing a basic aliphatic group or a basic aromatic group; a water-soluble polymerizable compound; and water; and a treatment liquid including an aggregating agent which forms an aggregate when contacting with the ink composition.

A second aspect of the invention provides an image forming method using the ink set according to the first aspect of the invention, the image forming method including: applying the ink composition in the ink set onto a recording medium by ink-jetting; and applying the treatment liquid in the ink set onto the recording medium.

### BRIEF EXPLANATION OF THE DRAWINGS

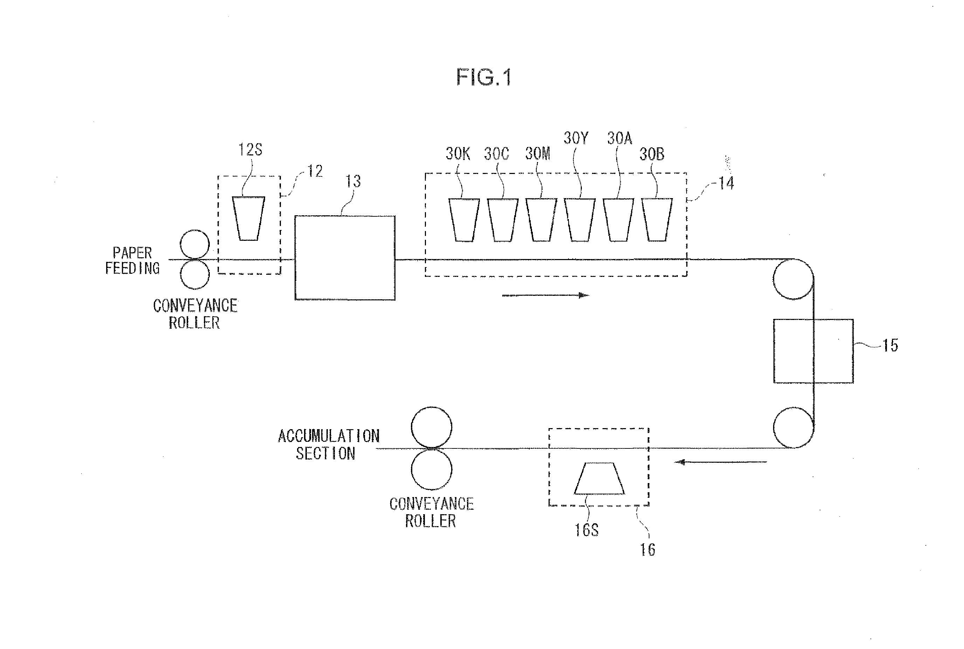

Fig. 1 is a schematic diagram showing an example of the configuration of an inkjet recording apparatus used for the image forming method of the present invention.

### DETAILED DESCRIPTION OF THE INVENTION

Exemplary embodiments according to the first aspect and the second aspect of the invention include, though are not limited to, the following items <1> to <15>.
<1> An ink set including: an ink composition including a pigment coated with a water-insoluble polymer; a water-soluble polymer having a hydrophobic structural unit (A), a structural unit (B) containing an anionic group, and a structural unit (C) containing a basic aliphatic group or a basic aromatic group; a water-soluble polymerizable compound; and water; and a treatment liquid including an aggregating agent which forms an aggregate by contact with the ink composition.
<2> The ink set according to the item <1>, wherein the polymerizable compound includes a compound which does not have a dissociative functional group.
<3> The ink set according to the item <1> or <2>, wherein the polymerizable compound has two or more polymerizable functional groups each selected from the group consisting of a (meth)acrylamido group, a maleimido group, a vinylsulfone group, and an N-vinylamido group, and has a ratio of the molecular weight of the polymerizable compound to the number of the polymerizable functional groups in one molecule thereof (molecular weight/number of Polymerizable functional groups) of 175 or lower.
<4> The ink set according to any one of the items <1> to <3>, wherein the polymerizable compound includes a compound having at least one (meth)acrylamido group.
<5> The ink set according to any one of the items <1> to <4>, wherein, in the water-soluble polymer, the structural unit (B) containing an anionic group is a structural unit containing a carboxylic acid group, a phosphoric acid group, or a sulfonic acid group.
<6> The ink set according to any one of the items <1> to <5>, wherein, in the water-soluble polymer, the structural unit (B) containing an anionic group is a structural unit containing a carboxylic group and has an acid value of from 80 mgKOH/g to 200 mgKOH/g.
<7> The ink set according to any one of the items <1> to <6>, wherein, in the water-soluble polymer, the structural unit (C) containing a basic aliphatic group or a basic aromatic group is a structural unit containing an aliphatic tertiary amino group.
<8> The ink set according to any one of the items <1> to <7>, wherein the water-insoluble polymer includes a hydrophobic constituent unit and a hydrophilic constituent unit.
<9> The ink set according to any one of the items <1> to <8>, wherein the water-insoluble polymer incluses a styrene-(meth)acrylic acid copolymer, a styrene-(meth)acrylic acid-(meth)acrylic ester copolymer, a styrene-(meth)acrylic acid-alkyl (meth)acrylate copolymer, a (meth)acrylic ester-(meth)acrylic acid copolymer, a (meth)acrylic ester-(meth)acrylic acid-alkyl (meth)acrylate copolymer, a polyethylene glycol (meth)acrylate-(meth)acrylic acid copolymer, or a styrene-maleic acid copolymer.
<10> The ink set according to any one of the items <1> to <9>, wherein the aggregating agent includes an organic acid.
<11> The ink set according to any one of the items <1> to <10>, wherein the aggregating agent includes an organic acid having a valency of two or more.
<12> The ink set according to any one of the items <1> to <11>, wherein at least one of the ink composition or the treatment liquid contains an initiator that initiates polymerization of the polymerizable compound due to irradiation with an actinic energy ray.
<13> An image forming method using the ink set according to any one of the items <1> to <12>, the image forming method including: applying the ink composition in the ink set onto a recording medium by ink jetting; and applying the treatment liquid in the ink set onto the recording medium.
<14> The image forming method according to the item <13> further including irradiating the ink composition applied onto the recording medium with an actinic energy ray.
<15> The image forming method according to the item <13> or <14>, wherein the recording medium includes a coated paper having a base paper and a coating layer containing an inorganic pigment provided on the base paper.

According to the present invention, an ink set with which an image having excellent image forming characteristics and excellent rub resistance can be formed, and which exhibits excellent ejection reliability, even when the image is formed at a high speed, in a case in which an image is formed on a recording medium by ink-jetting, and an image forming method using the ink set may be provided.
Exemplary embodiments according to the invention are described in detail below.

### Ink set

The ink set of the present invention includes: an ink composition including a pigment coated with a water-insoluble polymer, a water-soluble polymer having a hydrophobic structural unit(A), a structural unit (B) containing an anionic group, and a structural unit (C) containing a basic aliphatic group or a basic aromatic group, a water-soluble polymerizable compound, and water; and a treatment liquid including an aggregating agent which is capable of forming an aggregate by contact with the ink composition.
The ink set of the invention having such a constitution can form an image having excellent image forming characteristics (for example, reproducibility of fine lines or fine portions in the image) and excellent rub resistance, and exhibits excellent ejection reliability, in a case in which the image is formed on a recording medium by an inkjet method, even when the image is formed at a high speed.

The ink set of the present invention can be used in the form of an ink cartridge that holds the ink composition and the treatment liquid integrally or independently, which is preferable in view of convenience in handling and the like. An ink cartridge which is configured to include an ink set is known in the related technical field, and the ink set of the present invention can be prepared in the form of an ink cartridge by appropriately using a known method.
Hereinafter, the ink composition and the treatment liquid used in the ink set of the present invention are described in detail.

### Ink composition

The ink composition (hereinafter, may also be referred to as "the ink") in the ink set of the present invention includes a pigment coated with a water-insoluble polymer, a water-soluble polymer having a hydrophobic structural unit (A), a structural unit (B) containing an anionic group, and a structural unit (C) containing a basic aliphatic group or a basic aromatic group, a water-soluble polymerizable compound, and water. The ink composition may further include other components, if necessary.

### Pigment coated with water-insoluble polymer

The ink composition according to the present invention contains at least one pigment coated with a water-insoluble polymer (hereinafter, may also be referred to as "resin-coated pigment" or "colored particles"). The pigment coated with a water-insoluble polymer can be stably dispersed in an aqueous medium, and exhibits satisfactory dischargeability when prepared as an ink composition.

### Pigment

The pigment used in the present invention is not particularly limited, and may be selected as appropriate according to the purpose. The pigment may be an organic pigment or an inorganic pigment.
Examples of the organic pigment include an azo pigment, a polycyclic pigment, a dye chelate, a nitro pigment, a nitroso pigment, and aniline black. Among them, an azo pigment, a polycyclic pigment, and the like are preferable. Examples of the azo pigment include an azo lake, an insoluble azo pigment, a condensed azo pigment, and a chelate azo pigment. Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment. Examples of the dye chelate include a basic dye chelate and an acidic dye chelate.

Examples of the inorganic pigment include titanium oxide, iron oxide, calcium carbonate, barium sulfate, aluminum hydroxide, barium yellow, cadmium red, chrome yellow, and carbon black. Among them, carbon black is particularly preferable. Note that, the above carbon black may be produced by a known method, for example, a contact method, a furnace method, a thermal method, or the like.

The pigments which respectively form a black ink, a yellow ink, a magenta ink, and a cyan ink are not particularly limited, but examples of the pigments may include the pigments described in paragraphs [0142] to [0145] of JP-A No. 2007-100071, and in paragraphs [0075] to [0079] of JP-A No. 2007-261206.

The pigments used for the present invention may be used alone or in a combination of two or more of them selected from one or more intra-or inter-groups described above.

The content of the pigment according to the invention in the whole ink composition is preferably from 0.1% by mass to 15% by mass, more preferably from 0.5% by mass to 12% by mass, and particularly preferably from I % by mass to 10% by mass, from the viewpoints of color forming property, granularity, ink stability, and ejection reliability.

### Water-insoluble polymer

The water-insoluble polymer (hereinafter, may also be referred to as the "water-insoluble polymer dispersant" or "polymer dispersant") which is used to cover the pigment in the present invention is not particularly limited as long as the polymer is a water-insoluble polymer and can disperse a pigment. A conventionally known water-insoluble polymer dispersant can be used.
The term "water-insoluble polymer" as used herein refers to a polymer that exhibits an amount of dissolution of less than 2.0 g when the polymer is dried at 105°C for 2 hours and then dissolved in 100 g of water at 25°C. The amount of dissolution is preferably 1.5 g or less, and more preferably 1.0 g or less. The amount of dissolution is an amount of dissolution of the polymer when the polymer has been completely (100%) neutralized with sodium hydroxide or acetic acid according to the kinds of salt-forming group that may be possessed by the polymer.

The water-insoluble polymer dispersant may be configured to include, for example, both a hydrophobic constituent unit and a hydrophilic constituent unit.
The monomer that forms the hydrophobic constituent unit is not particularly limited, and examples thereof may include a styrene type monomer, alkyl (meth)acrylate, and an aromatic group-containing (meth)acrylate.
Note that, in this specification, the term "(meth)acrylate" means at least one of "acrylate" or "methacrylate".

The monomer that forms the hydrophilic constituent unit is not particularly limited as long as the monomer contains a hydrophilic group. Examples of the hydrophilic group may include a nonionic group, a carboxylic acid group, a sulfonic acid group, and a phosphoric acid group. Specifically, examples of the nonionic group include a hydroxyl group, an amido group (in which the nitrogen atom is not substituted), a group derived from an alkylene oxide polymer (for example, polyethylene oxide, polypropylene oxide, or the like), and a group derived from a sugar alcohol.
The hydrophilic constituent unit according to the invention preferably contains at least a carboxylic acid group from the viewpoint of dispersion stability of the pigment, and a form in which the hydrophilic constituent unit contains both a nonionic group and a carboxylic acid group is also preferable.

Specific examples of the water-insoluble polymer dispersant include a styrene-(meth)acrylic acid copolymer, a styrene-(meth)acrylic acid-(meth)acrylic ester copolymer, a styrene-(meth)acrylic acid-alkyl (meth)acrylate copolymer, a (meth)acrylic ester-(meth)acrylic acid copolymer, a (meth)acrylic ester-(meth)acrylic acid-alkyl (meth)acrylate copolymer, a polyethylene glycol (meth)acrylate-(meth)acrylic acid copolymer, and a styrene-maleic acid copolymer.
Note that, in this specification, the term "(meth)acryl" means at least one of "acryl" or "methacryl".

From the viewpoint of dispersion stability of the pigment, the water-insoluble polymer dispersant is preferably a vinyl polymer containing a carboxylic acid group, and more preferably a vinyl polymer having a constituent unit derived from an aromatic group-containing monomer as the hydrophobic constituent unit and a constituent unit containing a carboxylic acid group as the hydrophilic constituent unit.

The acid value (mgKOH/g) of the water-insoluble polymer dispersant is preferably from 25 to 100, more preferably from 25 to 90, and even more preferably from 40 to 80, from the viewpoints of dispersibility and dispersion stability of the pigment.
The acid value of the water-insoluble polymer dispersant is a value determined by the method described in Japanese Industrial Standards (JIS) (JISK0070 : 1992), the disclosure of which is incorporated by reference herein.

The weight average molecular weight of the water-insoluble polymer dispersant is preferably from 3,000 to 200,000, more preferably from 5,000 to 100,000, even more preferably from 5,000 to 80,000, and particularly preferably from 10,000 to 60,000, from the viewpoint of dispersion stability of the pigment.
Here, the weight average molecular weight of the polymer is a value of molecular weight that is measured by the differential refractometer detection with THF (tetrahydrofuran) as a solvent using a GPC analyzer equipped with columns TSKGEL GMHXL, TSKGEL G4000HXL, and TSKGEL G2000HXL (all trade names, manufactured by Tosoh Corporation), and that is obtained in terms of polystyrene used as a reference material.

The content of the water-insoluble polymer dispersant in the colored particles is preferably from 10% by mass to 100% by mass, more preferably from 20% by mass to 70% by mass, and even more preferably from 30% by mass to 50% by mass, with respect to the pigment, from the viewpoints of dispersion stability of the pigment and ink coloring properties. When the content of the water-insoluble polymer dispersant in the colored particles is within the above range, the pigment is covered with an appropriate amount of the polymer dispersant and, as a result, colored particles each of which has a small diameter and exhibits excellent stability over time may be readily obtained, which is preferable.

The colored particle may contain an additional dispersant, in addition to the above water-insoluble polymer dispersant. For example, a conventionally known water-soluble low molecular weight dispersant, a water-soluble polymer, or the like may be used. The content of the additional dispersant is preferably within the range of the content of the water-insoluble polymer dispersant in the colored particle.

The volume average particle diameter of the colored particles is preferably from 10 nm to 200 nm, more preferably from 10 nm to 150 nm, and even more preferably from 10 nm to 100 nm. When the volume average particle diameter is 200 nm or less, color reproducibility may be improved, and droplet ejection properties in inkjet recording may be satisfactory. When the volume average particle diameter is 10 nm or more, light fastness may be improved.
The particle diameter distribution of the colored particles is not particularly limited, and may be any of a broad particle diameter distribution or a monodispersed particle diameter distribution. Further, two or more types of colored particles each having a monodispersed particle diameter distribution may be used by mixing them.
The volume average particle diameter and particle diameter distribution of the colored particles can be measured using, for example, a light scattering method.

In the present invention, one type of the colored particles may be used alone, or two or more types of them may be used in combination.

### Method of preparing colored particles

In the colored particles, it is enough that at least a part of the surface of the pigment is covered with the above water-insoluble polymer dispersant. The colored particles can be obtained as a colored particle dispersion by, for example, subjecting a mixture containing a pigment, a water-insoluble polymer dispersant and, as necessary, a solvent (preferably, an organic solvent), and the like to a dispersion treatment using a disperser.

The colored particle dispersion can be produced by, for example, a method including a process of adding an aqueous solution containing a basic substance to a mixture of a pigment, the above water-insoluble polymer dispersant, and an organic solvent which dissolves or disperses the dispersant (a mixing and hydration process) and then, a process of removing at least a portion of the organic solvent from the resulting mixture (a solvent removal process). More specifically, the colored particle dispersion can be produced by a production method including the following process (1) and process (2), but the present invention is not limited thereto.

Process (1): Dissolving or dispersing the water-insoluble polymer dispersant in an organic solvent which dissolves or disperses the dispersant, to obtain a mixture (a mixing process) and subsequently, adding a pigment, a solution containing a basic substance and water as a main component, water, and as necessary, a surfactant and the like to the above mixture, and then subjecting the resulting mixture to a dispersion treatment to obtain an oil-in-water type dispersion (a dispersion process).
Process (2): Removing at least a portion of the organic solvent from the resulting mixture that has been subjected to the dispersion treatment.
In the colored particle dispersion obtained by the production method including the above process (1) and process (2), the pigment is finely dispersed and may maintain a good dispersion state, and the colored particle dispersion obtained by this method may exhibit excellent stability over time.

The basic substance is used to neutralize anionic groups (preferably, carboxylic acid groups) which may be possessed by the water-insoluble polymer. The degree of neutralization of the anionic groups is not particularly limited. Concerning the liquid properties of the finally obtained colored particle dispersion, usually, it is preferable that the pH of the colored particle dispersion is, for example, from 7.5 to 10. The value of pH may also be determined according to the desired degree of neutralization of the water-insoluble polymer dispersant.

It is necessary that the organic solvent can dissolve or disperse the water-insoluble polymer dispersant. In addition to this, it is preferable that the organic solvent has a certain degree of affinity to water. Specifically, an organic solvent having solubility in water at 20°C of from 10% by mass to 50% by mass is preferable. Preferable examples of the organic solvent include alcohol solvents, ketone solvents, and ether solvents. Specifically, examples of the alcohol solvents include ethanol, isopropanol, n-butanol, t-butanol, isobutanol, and diacetone alcohol. Examples of the ketone solvents include acetone, methyl ethyl ketone, diethyl ketone, and methyl isobutyl ketone. Examples of the ether solvents include dibutyl ether, tetrahydrofuran, and dioxane. Among these solvents, isopropanol, acetone, and methyl ethyl ketone are preferable, and methyl ethyl ketone is particularly preferable. The organic solvents may be used alone or in a combination of two or more of them.

In the production of the colored particle dispersion, kneading and dispersion treatment may be carried out while applying strong shear force by using a twin roll, a triple roll, a ball mill, a thoron mill, a Disper, a kneader, a co-kneader, a homogenizer, a blender, a single-screw extruder, a twin-screw extruder, or the like. Details on kneading and dispersion are described in, for example, "Paint Flow and Pigment Dispersion" written by T.C. Patton (published by John Wiley and Sons, Inc., 1964).
Further, according to the needs, fine dispersion treatment with beads which have a particle diameter of from 0.01 mm to 1 mm and are made of glass, zirconia, or the like, using a vertical or horizontal sand grinder, a pin mill, a slit mill, an ultrasonic disperser, or the like may be performed.

In the solvent removal process, the method of removing the organic solvent is not particularly limited, and the organic solvent may be removed by a known method such as distillation under reduced pressure.

### Water-soluble polymer including hydrophobic structural unit (A), structural unit (B) containing anionic group, and structural unit (C) containing basic aliphatic group or basic aromatic group

The ink composition according to the invention includes at least one water-soluble polymer (hereinafter, may also be referred to as "amphoteric water-soluble polymer") which has a hydrophobic structural unit (A), a structural unit (B) containing an anionic group, and a structural unit (C) containing a basic aliphatic group or a basic aromatic group.
When the polymer to be positively added to the ink composition is insoluble in water, there are cases in which the stability of the ink composition is deteriorated. When the polymer does not have the structural unit (B) containing an anionic group and the structural unit (C) containing a basic aliphatic group or a basic aromatic group together, there are cases in which the aggregation which is caused when the ink composition is in contact with the treatment liquid is insufficient.

In the present invention, the term "water-soluble" in the amphoteric water-soluble polymer means that the amount of dissolution of the polymer is 5.0 g or more when the polymer is dried under reduced pressure at 105°C for 2 hours and then dissolved in 100 g of water at 25°C. The amount of dissolution of the polymer is preferably 10.0 g or more, and more preferably 15.0 g or more. The above amount of dissolution is an amount of dissolution of a polymer whose salt-forming groups are completely (100%) neutralized with sodium hydroxide.

### Hydrophobic structural unit (A)

The amphoteric water-soluble polymer contains one type or two or more types of hydrophobic structural unit (A).
From the viewpoint of ejection stability of the ink, the content of the above (A) in the amphoteric water-soluble polymer is preferably in a range exceeding 20% by mass of the total mass of the polymer, more preferably in a range of from higher than 20% by mass to 80% by mass, still more preferably in a range of from higher than 30% by mass to 80% by mass, and particularly preferably in a range of from 50% by mass to 80% by mass.

The above (A) can be introduced into the amphoteric water-soluble polymer through polymerization using a hydrophobic monomer corresponding to this structural unit. Examples of the hydrophobic monomer may include vinyl monomers such as (meth)acrylates, (meth)acrylamides, styrenes, and vinylesters, and compounds having an aromatic ring that is linked to an atom of the main chain thereof through a linking group. These hydrophobic monomers may be used one type alone or two or more types in combination.

Examples of the (meth)acrylates include methyl (meth)acrylate, ethyl (meth)acrylate, butyl (meth)acrylate, isobutyl (meth)acrylate, hexyl (meth)acrylate, dodecyl (meth)acrylate, benzyl (meth)acrylate, and phenoxyethyl (meth)acrylate. Among them, benzyl (meth)acrylate, dodecyl (meth)acrylate, butyl (meth)acrylate, and methyl (meth)acrylate are preferable.
Examples of the (meth)acrylamides include N-cyclohexyl (meth)acrylamide, N-(2-methoxyethyl) (meth)acrylamide, N,N-diallyl (meth)acrylamide, and N-allyl (meth)acrylamide,
Examples of the styrenes include styrene, methylstyrene, dimethylstyrene, trimethylstyrene, ethylstyrene, isopropylstyrene, n-butylstyrene, tert-butylstyrene, methoxystyrene, butoxystyrene, acetoxystyrene, chlorostyrene, dichlorostyrene, bromostyrene, chloromethylstyrene, hydroxystyrene protected by a group (for example, t-Boc (tert-butoxycarbonyl) or the like) that is capable of deprotection with an acidic substance, methyl vinylbenzoate, α-methylstyrene, and vinylnaphthalene. Among them, styrene and α-methylstyrene are preferable.
Examples of the vinyl esters include vinyl acetate, vinyl chloroacetate, vinyl propionate, vinyl butyrate, vinyl methoxyacetate, and vinyl benzoate. Among them, vinyl acetate is preferable.

### Structural unit (B) containing anionic group

The amphoteric water-soluble polymer contains one type or two or more types of structural unit (B) containing an anionic group.
From the viewpoints of image forming characteristics, the content of the above (B) in the amphoteric water-soluble polymer is preferably in a range exceeding 10% by mass of the total mass of the polymer, more preferably in a range of from higher than 10% by mass to 30% by mass, still more preferably in a range of from higher than 10% by mass to 25% by mass, and particularly preferably in a range of from 15% by mass to 25% by mass.

The above (B) can be introduced into the amphoteric water-soluble polymer through polymerization using a monomer containing an anionic group (hereinafter, may also be referred to as "anionic monomer") which corresponds to this structural unit. Here, the term "anionic monomer" refers to a monomer compound having an anionic group which can possess a negative charge in the ink. The anionic group is not particularly limited, but is preferably any of a carboxylic acid group, a phosphoric acid group, a sulfonic acid group, a phosphonic acid group, a phosphinic acid group, or a sulfinic acid group, and most preferably a carboxylic acid group. Specific examples of a monomer containing a carboxylic acid group include acrylic acid, and methacrylic acid.
The anionic monomers may be used alone or in a combination of two or more of them.

### Structural unit (C) containing basic aliphatic group or basic aromatic group

The amphoteric water-soluble polymer contains one type or two or more types of (C) structural unit containing a basic aliphatic group or a basic aromatic group.
From the viewpoints of image forming characteristics, the content of the above (C) in the amphoteric water-soluble polymer is preferably in a range exceeding 1% by mass of the total mass of the polymer, more preferably in a range of from higher than 3% by mass to 80% by mass, stll more preferably in a range of from higher than 3% by mass to 60% by mass, and particularly preferably in a range of from 3% by mass to 50% by mass.

The above (C) can be introduced into the amphoteric water-soluble polymer through polymerization using a monomer having a basic aliphatic group or a basic aromatic group. Alternatively, a basic aliphatic group or a basic aromatic group may be introduced into the polymer chain after the polymerization of the polymer. Examples of the basic aliphatic group include an aliphatic amino group; and examples of the basic aromatic group include an aromatic amino group and a nitrogen-containing aromatic heterocyclic group.

The monomer for introducing the above (C) into the amphoteric water-soluble polymer is not particularly limited as long as the monomer has a functional group capable of polymerization and a basic aliphatic group or a basic aromatic group, and any known monomers can also be used.

Specific examples of the monomer include dialkylamino group-containing (meth)acrylates such as N,N-dimethylaminomethyl (meth)acrylate, N,N-diethylaminomethyl (meth)acrylate, N,N-dimethylaminoethyl (meth)acrylate, N,N-diethylaminoethyl (meth)acrylate, N,N-dimethylaminopropyl (meth)acrylate, N,N-dimethylaminobutyl (meth)acrylate, p-N,N-dimethylaminophenyl (meth)acrylate, p-N,N-diethylaminophenyl (meth)acrylate, p-N,N-dipropylaminophenyl (meth)acrylate, p-N,N-dibutylaminophenyl (meth)acrylate, p-N-laurylaminophenyl (meth)acrylate, p-N-stearylaminophenyl (meth)acrylate, p-N,N-dimethylaminobenzyl (meth)acrylate, p-N,N-diethylaminobenzyl (meth)acrylate, p-N,N-dipropylaminobenzyl (meth)acrylate, p-N,N-dibutylaminobenzyl (meth)acrylate, p-N-laurylaminobenzyl (meth)acrylate, and p-N-stearylaminobenzyl (meth)acrylate.
Specific examples further include dialkylamino group-containing (meth)acrylamides such as N,N-dimethylaminoethyl (meth)acrylamide, N,N-diethylaminoethyl (meth)acrylamide, N,N-dimethylaminopropyl (meth)acrylamide, N,N-diethylaminopropyl (meth)acrylamide, p-N,N-dimethylaminophenyl (meth)acrylamide, p-N,N-diethylaiminophenyl (meth)acrylamide, p-N,N-dipropylaminophenyl (meth)acrylamide, p-N,N-dibutylaminophenyl (meth)acrylamide, p-N-laurylaminophenyl (meth)acrylamide, p-N-stearylaminophenyl (meth)acrylamide, p-N,N-dimethylaminobenzyl (meth)acrylamide, p-N,N-diethylaminobenzyl (meth)acrylamide, p-N,N-dipropylaminobenzyl (meth)acrylamide, p-N,N-dibutylaminobenzyl (meth)acrylamide, p-N-laurylaminobenzyl (meth)acrylamide, and p-N-stearylaminobenzyl (meth)acrylamide.
Moreover, specific examples include monomers having a nitrogen-containing aromatic heterocyclic group or an aromatic amino group such as vinylpyridine, vinylpyrrole, vinylindole, vinyltetrahydroindole, vinylimidazole, vinyltriazole, vinyltetrazole, (meth)acryloyloxyethyl pyridine, (meth)acryloyloxyethyl pyrrole, (meth)acryloyloxyethyl indole, (meth)acryloyloxyethyl tetrahydroindole, (meth)acryloyloxyethyl imidazole, (meth)acryloyloxyethyl triazole, and (meth)acryloyloxyethyl tetrazole.

Among these monomers, from the viewpoint of image bleeding, monomers having an aliphatic amino group, especially monomers having a dialkylamino group (in which the alkyl moiety has from 1 to 12 carbon atoms) are preferable, monomers having an aliphatic tertiary amino group are more preferable, and dialkylamino group (in which the alkyl moiety has from 1 to 4 carbon atoms) containing (meth)acrylates are even more preferable.

Exemplified compounds M-1 to M-14 are shown below as the monomer for introducing the above (C) into the amphoteric water-soluble polymer. However, it should not be construed that the present invention is limited to the following exemplified compounds.

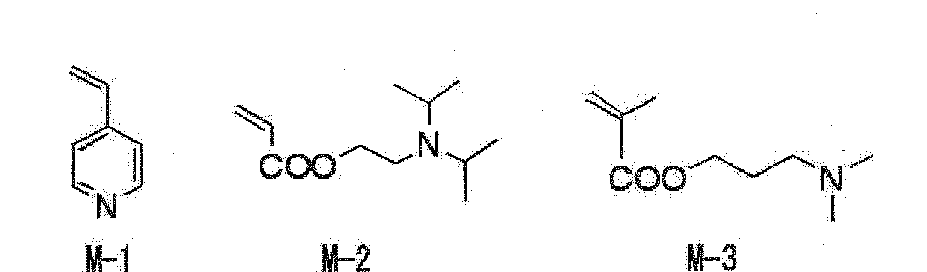

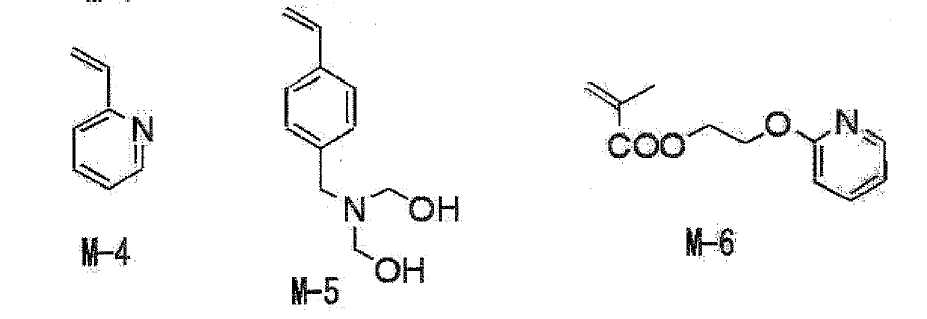

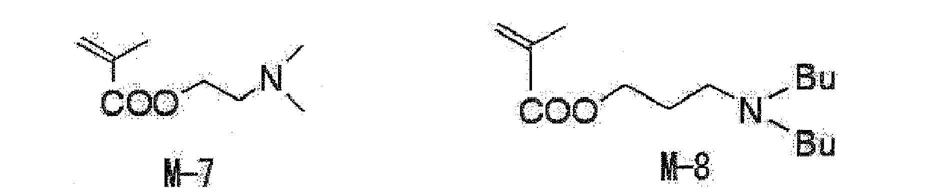

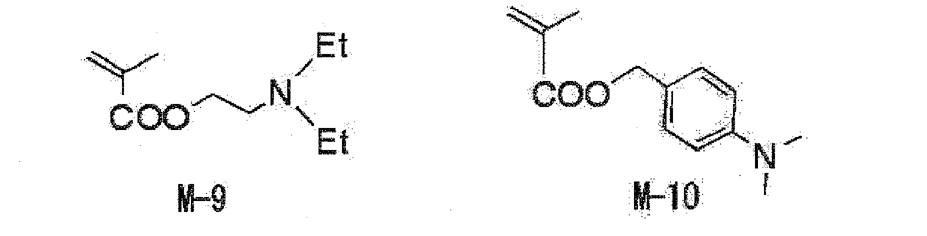

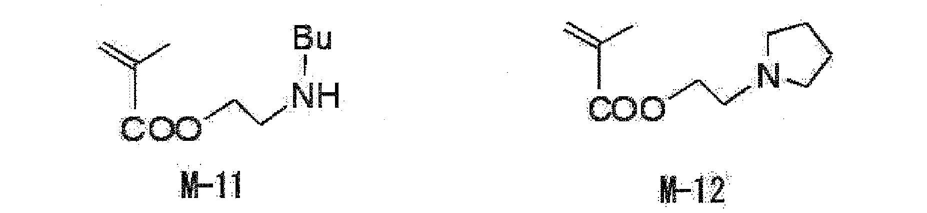

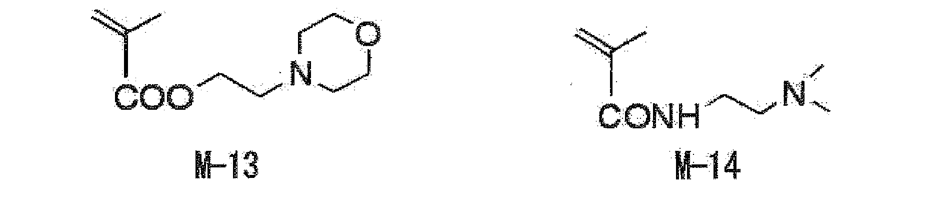

The amphoteric water-soluble polymer may be synthesized using the monomers corresponding to the respective structural units by various polymerization methods, for example, solution polymerization, precipitation polymerization, suspension polymerization, bulk polymerization, or emulsion polymerization. The polymerization reaction may be carried out under a known operation, such as a batch, semi-continuous, or continuous system.

Examples of a method of initiation of the polymerization include a method using a radical initiator and a method using photoirradiation or radiation-irradiation. These methods of polymerization and methods of initiation of polymerization are described in, for example, "Kobunshi Gosei Hoho" by Teiji Tsuruta, Revised Edition (published by Nikkan Kogyo Shimbun, Ltd., 1971) and "Kobunshi Gosei no Jikkenho" by Takayuki Ohtu and Masaetu Kinoshita (published by Kagaku-Dojin Publishing Company Inc., 1972), pages 124 to 154.

Among the polymerization methods, particularly, a solution polymerization method using a radical initiator is preferable. Examples of the solvent used in the solution polymerization method include organic solvents such as ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methanol, ethanol, 1-propanol, 2-propanol, 1-butanol, and dipropylene glycol. These solvents may be used alone or in a combination of two or more of them, or may be mixed with water as a mixed solvent.
The polymerization temperature should be determined in consideration of the molecular weight of the intended polymer, the kind of the initiator, and the like. The polymerization temperature is usually from about 0°C to about 100°C. and is preferably from about 50°C to about 100°C. The reaction pressure may be selected as appropriate, and is usually from 1. kg/cm² to 100 kg/cm², and particularly preferably from about 1 kg/cm² to about 30 kg/cm². The reaction period may be from about 5 hours to about 30 hours. The resulting polymer may be subjected to a purification treatment such as reprecipitation.

The amphoteric water-soluble polymer may be a random copolymer having the respective structural units introduced irregularly, or may be a block copolymer having the respective structural units introduced regularly. In the case of a block copolymer, the respective structural units may be synthesized in any order of introduction, or the same constituent component may be used two or more times. However, it is preferable that the amphoteric water-soluble polymer is a random copolymer, from the viewpoints of versatility and productivity.

The range of molecular weight of the amphoteric water-soluble polymer is preferably from 1,000 to 50,000, more preferably from 2,000 to 30,000, and even more preferably from 3,000 to 20,000, in terms of weight average molecular weight (Mw).
The molecular weight distribution (which is represented by: weight average molecular weight value/number average molecular weight value) of the amophoteric water-soluble polymer is preferably from 1 to 6, and more preferably from 1 to 4. The molecular weight distribution within the above range is preferable from the viewpoints of shortening of the time for dispersion of the pigment and stability over time of the dispersion.
Here, the number average molecular weight and the weight average molecular weight are values of molecular weight measured by the differential refractometer detection with NMP (1-methyl-2-pyrrolidone) as a solvent using a GPC analyzer equipped with columns TSKGEL GMHXL, TSKGEL G4000HXL, and TSKGEL G2000HXL (all trade names, manufactured by Tosoh Corporation), and is obtained in terms of polystyrene used as a reference material.

The amophoteric water-soluble polymer is preferably a polymer having a structural unit containing a carboxylic acid group, from the viewpoints of the stability of the polymer in the ink and the aggregation speed when contacting with the treatment liquid. It is more preferable that the amophoteric water-soluble polymer has a structural unit containing a carboxylic acid group and has an acid value (mgKOH/g) of from 80 to 200. The acid value is more preferably from 85 to 160, and particularly preferably from 90 to 150, from the viewpoints of the stability of the polymer in the ink and the aggregation speed when contacting with the treatment liquid.
When the acid value is 80 or more, the stability of the polymer in the ink may be improved, and when the acid value is 200 or less, the aggregation property when contacting with the treatment liquid may be improved.
Note that, the acid value (mgKOH/g) of the amophoteric water-soluble polymer is a value determined by the method described in JIS (JIS K 0070 : 1992), the disclosure of which is incorporated by reference herein.

Hereinafter, specific examples (exemplary compounds SP-1 to SP-6) of the amphoteric water-soluble polymer are shown. However, the present invention is not limited to these examples. The numbers in the parentheses indicate ratios by mass of copolymerization components.

SP-1: M-7/ methyl methacrylate/ methacrylic acid/ dodecyl methacrylate (11.8/ 34.5/ 15.5/38.2) (acid value of 101)
SP-2: M-7/ methyl methacrylate/ methacrylic acid/ dodecyl methacrylate (17/29.3/ 15.5/38.2) (acid value of 101)
SP-3: M-7/ methyl methacrylate/ methacrylic acid/ dodecyl methacrylate (11.8/ 30/ 20/38.2) (acid value of 130)
SP-4: M-7/ methyl methacrylate/ methacrylic acid/ dodecyl methacrylate (11.8/ 25/ 25/38.2) (acid value of 163)
SP-5: M-4/ methyl methacrylate/ methacrylic acid/ dodecyl methacrylate (11.8/ 34.5/ 15.5/38.2) (acid value of 101)
SP-6: M-9/ methyl methacrylate/ methacrylic acid/ dodecyl methacrylate (11.8/ 34.5/ 15.5/38.2) (acid value of 101)

It is preferable that the amphoteric water-soluble polymer includes: a structural unit derived from (meth)acrylates, (meth)acrylamides, styrenes, or vinyl esters, as the above (A); a structural unit derived from a monomer containing a carboxylic acid group, a phosphoric acid group, or a sulfonic acid group, as the above (B); and a structural unit derived from a monomer containing an aliphatic amino group, as the above (C).
Further, it is more preferable that the amphoteric water-soluble polymer includes: a structural unit derived from (meth)acrylates as the above (A); a structural unit derived from a monomer containing a carboxylic acid group, as the above (B); and a structural unit derived from a monomer containing an aliphatic tertiary amino group, as (C) above.

In the present invention, the content of the amphoteric water-soluble polymer in the ink is preferably from 0.1% by mass to 6% by mass, more preferably from 0.1% by mass to 3.5% by mass, and still more preferably from 0.5% by mass to 2% by mass, with respect to the total mass of the ink composition, from the viewpoints of the stability of the polymer in the ink and the aggregation speed when contacting with the treatment liquid.
The amphoteric water-soluble polymers may be used alone or two or more of them may be used by mixing them.

### Water-soluble polymerizable compound

The ink composition according to the present invention contains at least one water-soluble polymerizable compound. The polymerizable compound has at least one polymerizable functional group (hereinafter, may also be referred to as polymerizable group") and is allowed to undergo polymerization when irradiated with an actinic energy ray. When the polymerizable compound is brought into contact with the treatment liquid, the polymerizable compound is incorporated into a space among the colored particles or among the amphoteric water-soluble polymer particles which are in an aggregated state, and is then polymerized and cured to strengthen the image.
Note that, the term "water-soluble" used in the polymerizable compound means that the polymerizable compound dissolves in water at 25°C at a proportion of 2% by mass or more. The polymerizable compound is preferably a compound that dissolves in water at a proportion of 5% by mass or more, more preferably a compound that dissolves at a proportion of 10% by mass or more, still more preferably a compound that dissolves at a proportion of 20% by mass or more, and particularly preferably a compound that is homogeneously mixed with water at any proportion.

The water-soluble polymerizable compound according to the present invention is preferably a water-soluble polymerizable compound which does not have a dissociative functional group from the viewpoint of avoiding inhibition of a reaction between the pigment, polymer dispersant, or amphoteric water-soluble polymer and the aggregating agent.

Examples of the water-soluble polymerizable compound which does not have a dissociative functional group may include polymerizable compounds such as (meth)acryl monomers as the polymerizable monomers. Examples of the (meth)acryl monomers include ultraviolet ray curing type monomers and oligomers such as an ester of (meth)acrylic acid with a polyhydric alcohol, an ester of (meth)acrylic acid with a glycidyl ether of a polyhydric alcohol, an ester of (meth)acrylic acid with polyethylene glycol, an ester of (meth)acrylic acid with an ethylene oxide adduct of a polyhydric alcohol, and a reaction product between a polybasic acid anhydride and a hydroxy group-containing (meth)acrylic ester.
The above polyhydric alcohol may have a chain therein that is elongated by an ethylene oxide chain formed through addition of ethylene oxide.

Further, as a water-soluble Polymerizable compound which does not have a dissociative functional group, an acrylic ester having two or more acryloyl groups in a molecule thereof, which may be derived from a compound having multiple hydroxy groups, may also be used. Examples of the compound having multiple hydroxy groups include a condensate of a glycol, an oligoether, and an oligoester.
Furthermore, an ester of (meth)acrylic acid with a polyol having two or more hydroxy groups such as monosaccharide or disaccharide is also preferable.

The water-soluble polymerizable compound according to the present invention is preferably a di- or higher functional monomer. From the viewpoint of improvement in rub resistance, the water-soluble polymerizable compound is preferably a difunctional to hexafunctional monomer. From the viewpoint of achieving both satisfactory solubility and satisfactory rub resistance, the water-soluble polymerizable compound is preferably a difunctional to tetrafunctional monomer.

Specific examples (a) to (f) of the water-soluble polymerizable compound which does not have a dissociative functional group are shown below. However, it should not be construed that the present invention is limited to these specific examples.

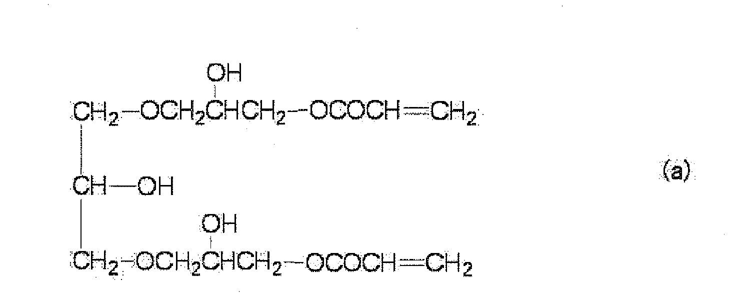

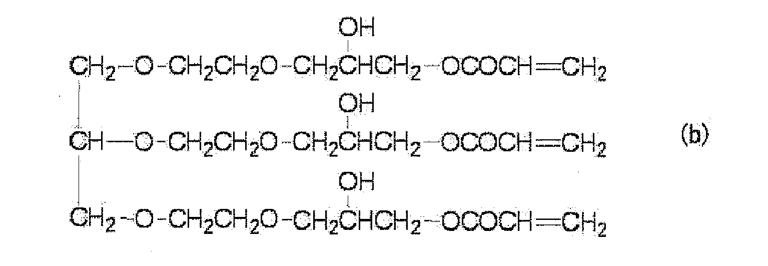

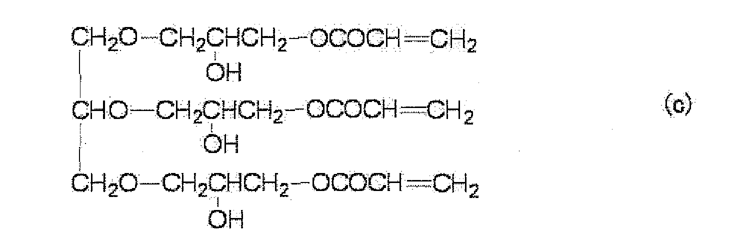

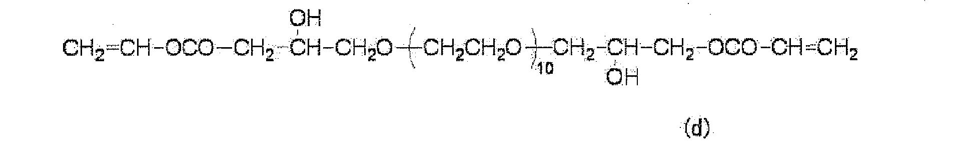

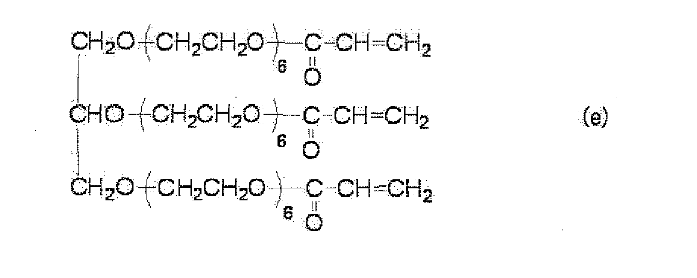

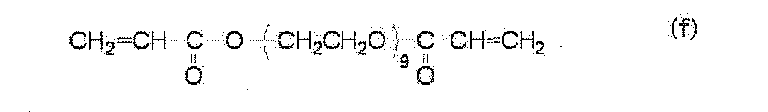

In the present invention, the water-soluble polymerizable compound which does not have a dissociative functional group preferably includes a compound containing, as a polymerizable group, at least one selected from the group consisting of a (meth)acrylamido group, a maleimido group, a vinylsulfone group, and an N-vinylamido group. When a polymerizable compound containing the above polymerizable group is used, satisfactory rub resistance and blocking resistance of an image may be realized.
There is no particular limitation to the number of the polymerizable groups in one molecule of the polymerizable compound. However, from the viewpoints of the rub resistance and blocking resistance of an image, the number of the polymerizable groups is preferably 2 or more, more preferably from 2 to 6, and still more preferably from 2 to 3. In a case in which the polymerizable compound has two or more Polymerizable groups, the two or more polymerizable groups may be the same or different from each other.

From the viewpoints of curing sensitivity, and rub resistance and blocking resistance of the image to be formed, the water-soluble polymerizable compound preferably has two or more polymerizable groups of at least one type selected from the group consisting of a (meth)acrylamido group, a maleimido group, a vinylsulfone group, and an N-vinylamido group, and it is more preferable that at least one of the polymerizable groups is a (meth)acrylamido group. It is more preferable that the water-soluble polymerizable compound has two or more (meth)acrylamido groups. The water-soluble polymerizable compound having at least one (meth)acrylamido group (preferably, two or more (meth)acrylamido groups) realizes improvement in curing sensitivity, rub resistance, and blocking resistance, and also realizes excellent ejection reliability when prepared as an ink composition.

It is preferable that the water-soluble polymerizable compound further has at least one nonionic group as a hydrophilic group, in addition to the polymerizable group.
Specific examples of the hydrophilic group may include an oxyalkylene group and an oligomer thereof, a hydroxyl group, an amido group, a sugar alcohol residue, a urea group, an imino group, and an amino group.
In the present invention, from the viewpoints of curing sensitivity, rub resistance, and blocking resistance, the hydrophilic group is preferably selected from the group consisting of an oxyalkylene group and an oligomer thereof, a hydroxyl group, an amido group, a sugar alcohol residue, a urea group, an imino group, and an amino group. The hydrophilic group is more preferably at least one selected from the group consisting of an oxyalkylene group and an oligomer thereof, and a hydroxyl group. The hydrophilic group is still more preferably at least one selected from the group consisting of an oxyethylene group and an oligomer thereof (preferably, n = 1 to 2), an oxypropylene group and an oligomer thereof (preferably, n = 1 to 2), and a hydroxyl group.

In a case in which the water-soluble polymerizable compound has two or more polymerizable groups and further contains a hydrophilic group, there is no particular limitation to the bonding embodiment of the polymerizable groups and the hydrophilic group. However, an embodiment in which the two or more polymerizable groups are linked through a hydrophilic group having a valency of two or more is preferable from the viewpoints of curing sensitivity and blocking resistance.

Examples of the hydrophilic group having a valency of two or more may include a residue obtained by removing one or more hydrogen atoms or hydroxyl groups from a compound selected from the following compound group.

### - Compound Group -

Polyols such as ethylene glycol, diethylene glycol, triethylene glycol, polyethylene glycol, propylene glycol, dipropylene glycol, tripropylene glycol, polypropylene glycol, 1,3-propanediol, 1,2-butanediol, 1,3-butanediol, 1,4-butanediol, 2,3-butanediol, 1,5-pentanediol, 1,4-pentanediol, 2,4-pentanediol, 3-methyl-1,5-pentanediol, 2-methyl-2,4-pentanediol, 1,5-hexanediol, 1,6-hexanediol, 2,5-hexanediol, glycerin, 1,2,4-butanetriol, 1,2,6-hexanetriol, 1,2,5-pentanetriol, thioglycol, trimethylolpropane, di(trimethylolpropane), trimethylolethane, di(trimethylolethane), neopentyl glycol, pentaerythritol, dipentaerythritol, condensates thereof, low molecular weight polyvinyl alcohol, or sugar.
Polyamines such as ethylenediamine, diethylenetriamine, triethylenetetramine, polyethyleneimine, or polypropylenediamine.
Saturated or unsaturated heterocycles such as pyridine, imidazole, pyrazine, piperidine, piperazine, or morpholine.

In the water-soluble polymerizable compound, a ratio of the molecular weight to the number of the polymerizable functional groups contained in one molecule, namely, a value obtained by dividing the molecular weight of the water-soluble polymerizable compound by the number of the polymerizable functional groups possessed by the compound (molecular weight of water-soluble polymerizable compound/number of polymerizable functional groups; hereinafter, referred to as "A value") is preferably 175 or less, and more preferably 165 or less, from the viewpoints of curing sensitivity, and rub resistance and blocking resistance of an image, and also from the viewpoint of ejection reliability when prepared as an ink composition. The A value is preferably 84 or more, from a structural point of view.

It is preferable that the water-soluble polymerizable compound has two or more polymerizable functional groups of at least one type selected from the group consisting of a (meth)acrylamido group, a maleimido group, a vinylsulfone group, and an N-vinylamido group, and has an A value defined as described above of from 84 to 175, from the viewpoints of curing sensitivity and blocking resistance, and also from the viewpoint of ejection reliability when prepared as an ink composition. It is more preferable that the water-soluble polymerizable compound has two or more polymerizable functional groups of at least one type selected from the group consisting of a (meth)acrylamido group, a maleimido group, a vinylsulfone group, and an N-vinylamido group, and has an A value of from 84 to 165, and it is still more preferable that the water-soluble polymerizable compound has two or more (meth)acrylamido groups, and has an A value of from 84 to 165.

Moreover, it is preferable that the water-soluble polymerizable compound has two or more polymerizable functional groups of at least one type selected from the group consisting of a (meth)acrylamido group, a maleimido group, a vinylsulfone group, and an N-vinylamido group, further has at least one nonionic hydrophilic group, and has an A value defined as described above of from 84 to 175. It is more preferable that the water-soluble polymerizable compound has two or more Polymerizable functional groups of at least one type selected from the group consisting of a (meth)acrylamido group, a maleimido group, a vinylsulfone group, and an N-vinylamido group, further has at least one nonionic hydrophilic group of at least one type selected from the group consisting of an oxyalkylene group, an oligomer thereof, and a hydroxy group, and has an A value of from 84 to 165. It is particularly preferable that the water-soluble polymerizable compound has two or more (meth)acrylamido groups, further has at least one nonionic hydrophilic group of at least one type selected from the group consisting of an oxyalkylene group, an oligomer thereof, and a hydroxyl group, and has an A value of from 84 to 165.

Specific examples of the water-soluble polymerizable compound are shown below. However, the present invention is not limited to these specific examples.

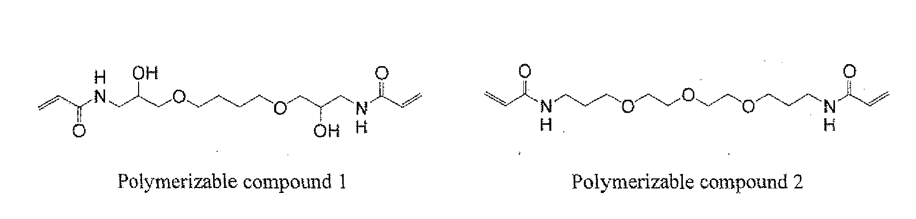

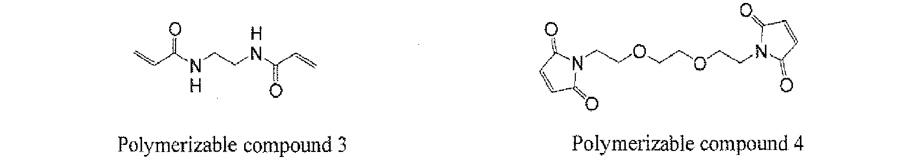

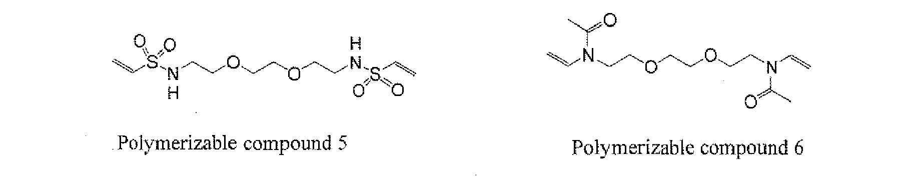

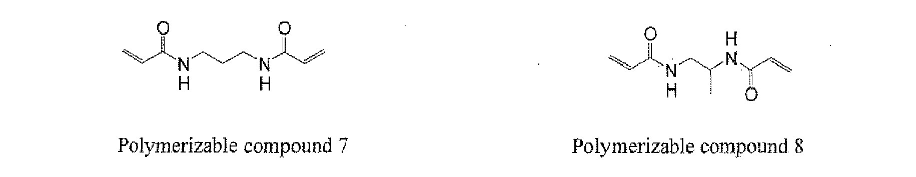

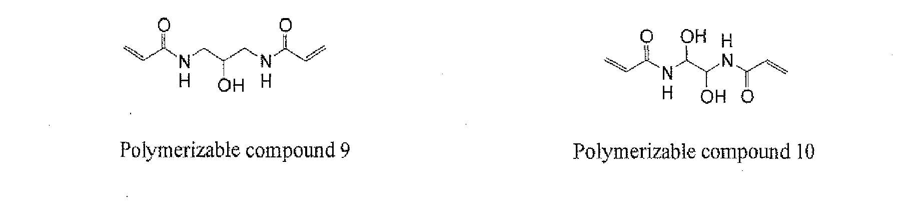

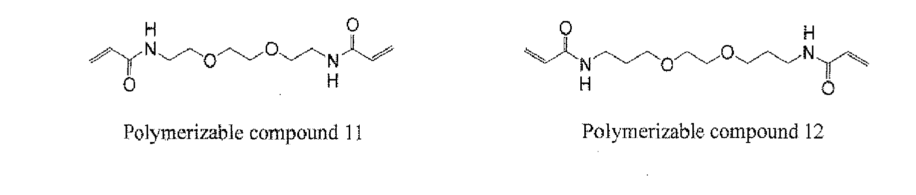

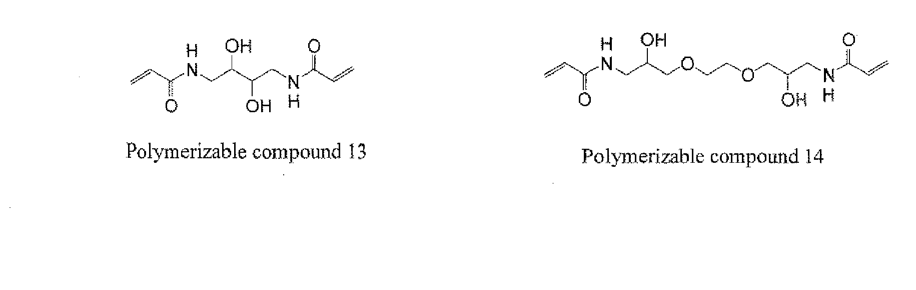

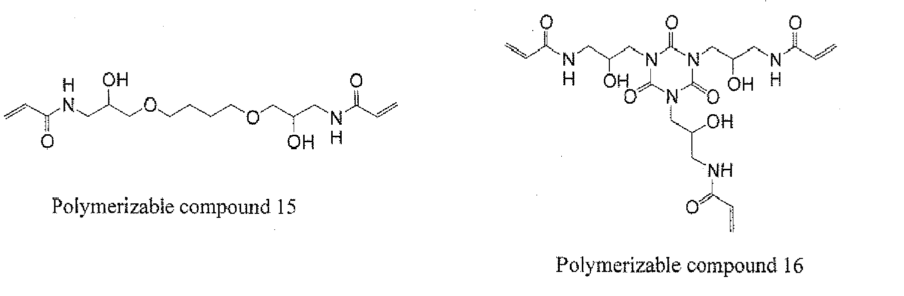

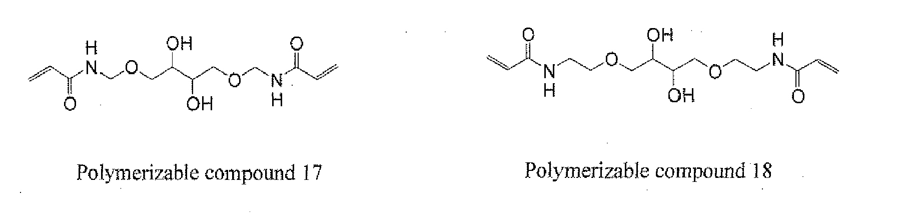

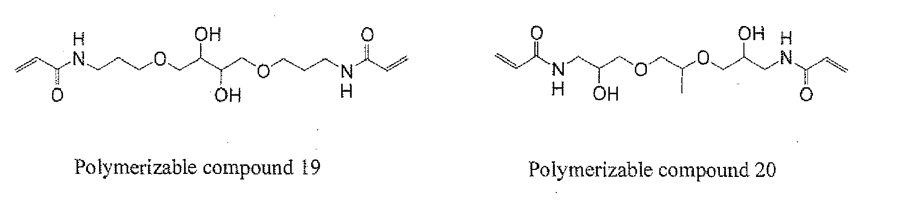

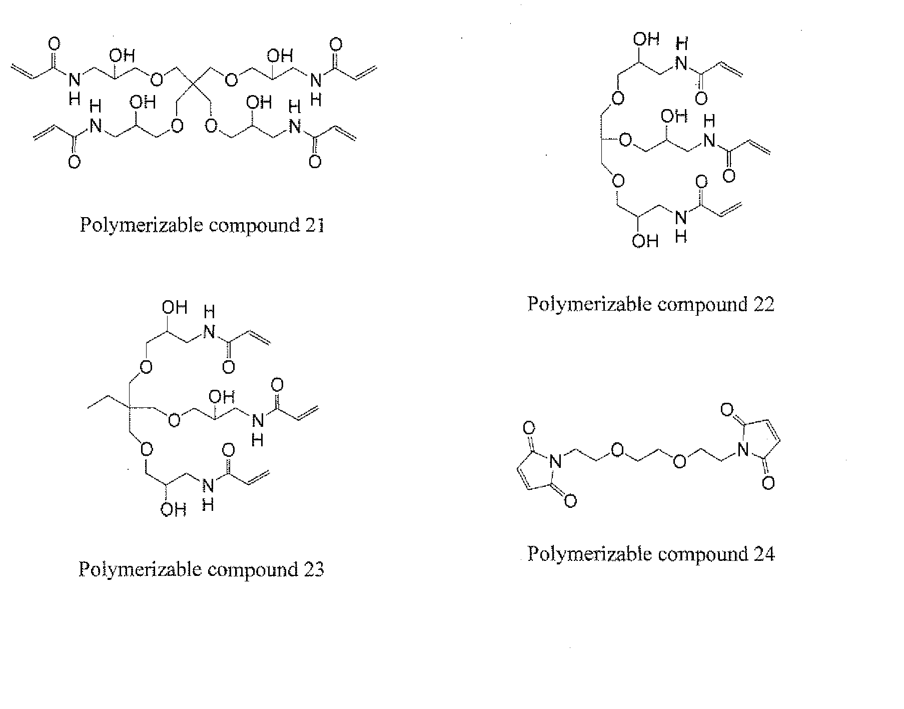

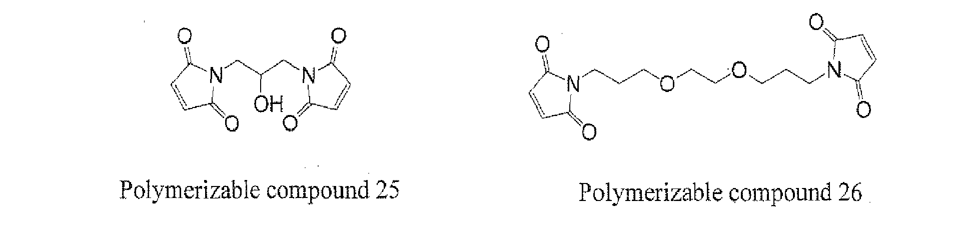

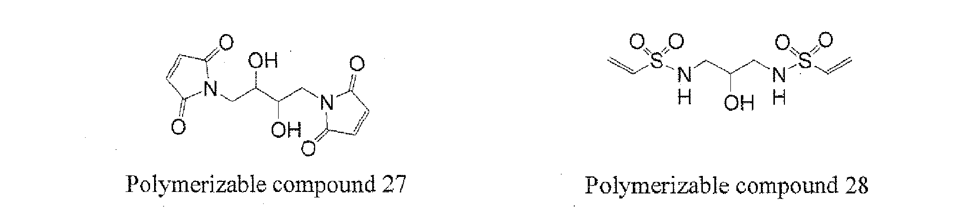

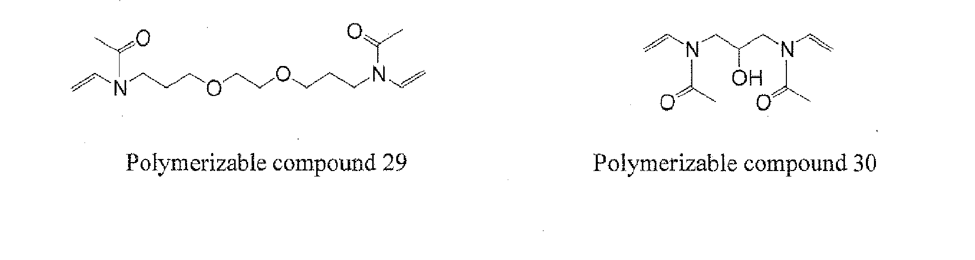

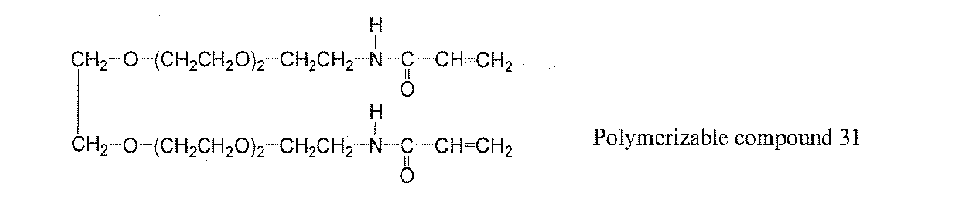

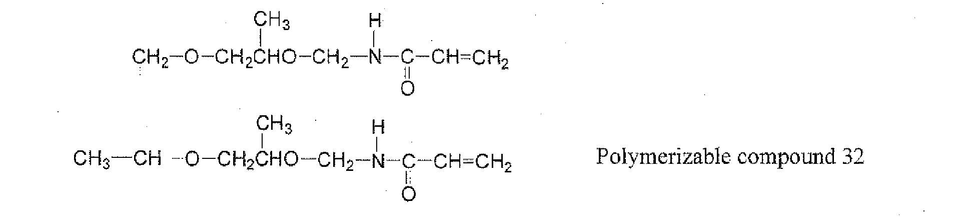

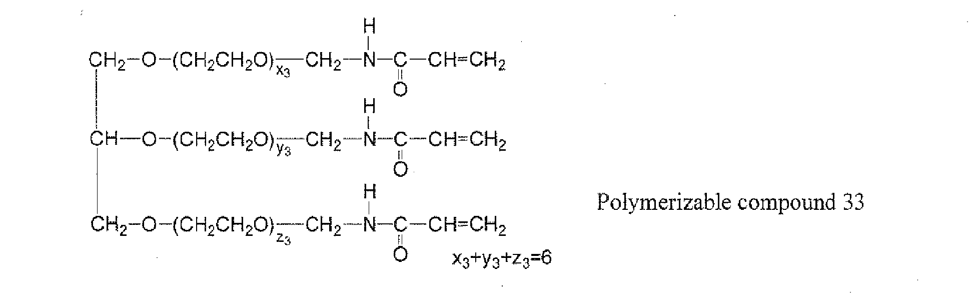

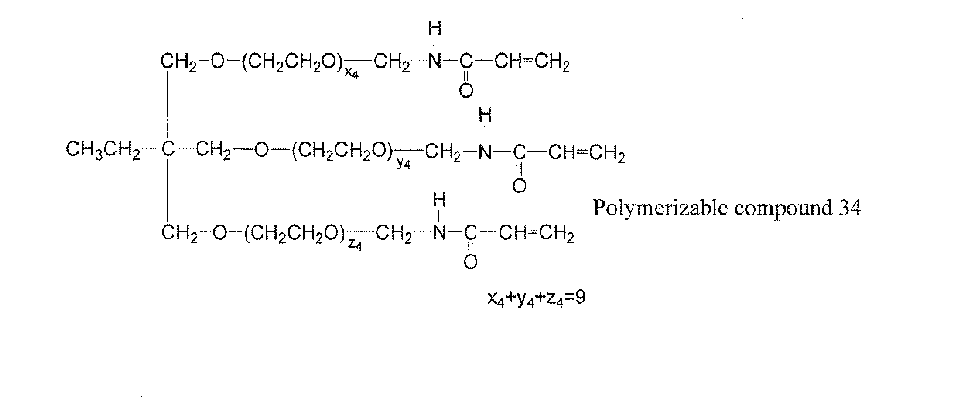

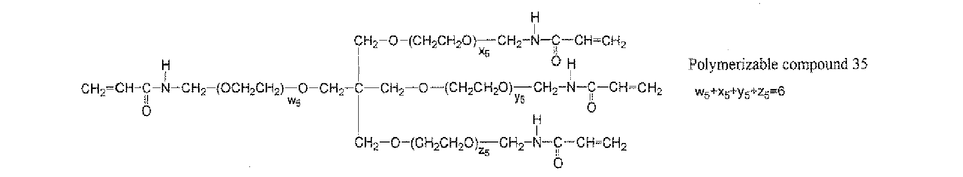

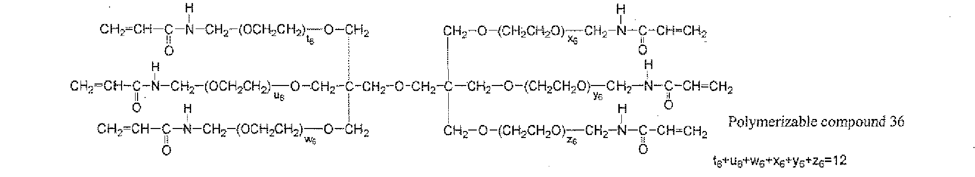

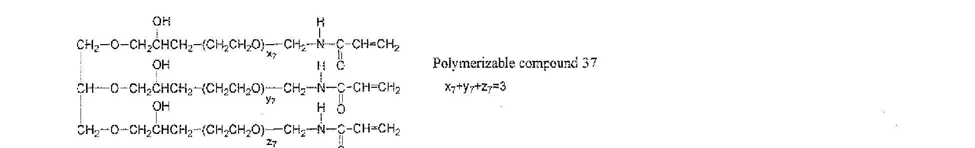

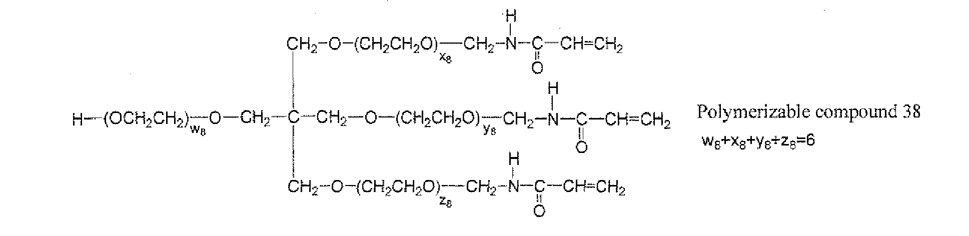

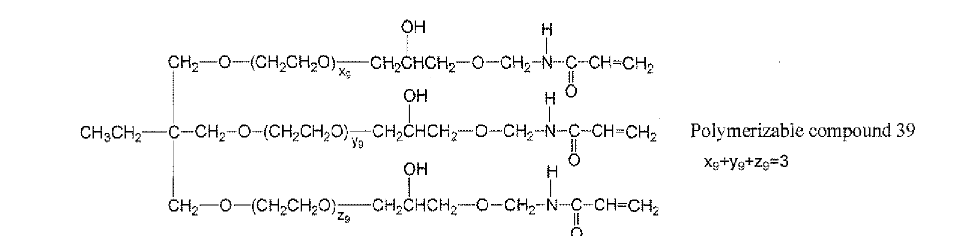

In the ink composition, one water-soluble polymerizable compound according to the present invention may be contained solely, or two or more water-soluble polymerizable compounds may be contained in combination.
The content of the water-soluble polymerizable compound in the ink composition is preferably from 4% by mass to 30% by mass, and more preferably from 10% by mass to 22% by mass.
With regard to the content ratio of the water-soluble polymerizable compound relative to the solids of the pigment, a ratio represented by [pigment: water-soluble polymerizable compound] is preferably from 1 : 1 to 1 : 30, and more preferably from 1 : 3 to I : 15. When the content ratio of the water-soluble polymerizable compound relative to the pigment is one or more, the image strength may be further improved, which results in excellent rub resistance of an image. The content ratio of 30 or less is advantageous in terms of pile height.

### Initiator

In the ink set of the present invention, it is preferable that at least one of the ink composition or the treatment liquid contains at least one initiator (hereinafter, may also be referred to as "polymerization initiator") that initiates polymerization of the water-soluble polymerizable compound by irradiating with an actinic energy ray. In the present invention, from the viewpoint of more effectively polymerizing the polymerizable compound incorporated in the ink composition, it is preferable that the ink composition contains the polymerization initiator.

As the polymerization initiator, known polymerization initiators may be used without any particular limitation. Preferable examples of the polymerization initiator which can be used in the present invention include an aromatic ketone, an acyl phosphine compound, an aromatic onium salt compound, an organic peroxide, a thio compound, a hexaarylbiimidazole compound, a keto oxime ester compound, a borate compound, an azinium compound, a metallocene compound, an active ester compound, a compound having a carbon-halogen bond, and an alkylamine compound. Further, the polymerization initiators described on pages 65 to 148 of "SHIGAISEN KOKA SISUTEMU (Ultraviolet Ray Curing System)" written by Kiyoshi Kato (published by Comprehensive Technology Center, 1989) may be described as preferable examples.

As the polymerization initiator in the present invention, any of a substance obtained by dispersing a water-insoluble initiator in water or a water-soluble initiator may be used, but a water-soluble polymerization initiator is preferably used. Note that, the term "water-soluble" in the polymerization initiator means that the polymerization initiator dissolves in distilled water at 25°C at a proportion of 0.5% by mass or more. The water-soluble polymerization initiator is preferably a compound that dissolves in distilled water at 25°C at a proportion of 1% by mass or more, and more preferably a compound that dissolves at a proportion of 3% by mass or more.

The polymerization initiators in the present invention may be used alone or two or more of them may be used by mixing them. Further, the polymerization initiator in the present invention may be used together with a sensitizer.
In a case in which the ink composition contains the polymerization initiator, the content of the polymerization initiator is preferably in a range of from 1% by mass to 40% by mass, and more preferably from 5% by mass to 30% by mass, with respect to the polymerizable compound. When the content of the polymerization initiator is 1% by mass or more with respect to the polymerizable compound, the rub resistance of an image may be further improved, which is advantageous in terms of high speed recording. The content of 40% by mass or less is advantageous in terms of ejection stability.

Examples of the sensitizer include an amine compound (e.g., an aliphatic amine, an amine containing an aromatic group, piperidine, or the like), a urea compound (e.g., an allyl based urea compound, o-torylthiourea, or the like), a sulfur-containing compounds (e.g., sodium diethyldithiophosphate, a soluble salt of an aromatic sulfinic acid, or the like), a nitrile compound (e.g., an N,N-disubstituted p-aminobenzonitrile, or the like), a phosphorus-containing compound (e.g., tri-n-butylphosphine, sodium diethyldithiophosphide, or the like), a nitrogen-containing compound (e.g., Michler's ketone, an N-nitrosohydroxylamine derivative, an oxazolidine compound, a tetrahydro-1,3-oxazine compound, a condensate of diamine with formaldehyde or acetaldehyde, or the like), a chlorine-containing compound (e.g., carbon tetrachloride, hexachloroethane, or the like), a high molecular weight amine that is a reaction product of an epoxy resin and amine, and triethanolamine triacrylate.
The sensitizer may be contained within a range that the effects of the present invention are not impaired.

### Water

The ink composition according to the present invention contains water. There is no particular limitation to the amount of water. The content of water in the ink composition is preferably from 10% by mass to 99% by mass, more preferably from 30% by mass to 80% by mass, and still more preferably from 50% by mass to 80% by mass.

### Water-soluble organic solvent

The ink composition according to the present invention may contain at least one water-soluble organic solvent. When a water-soluble organic solvent is contained, effects of anti-drying of the ink composition, wetting, or permeation acceleration into the recording medium can be obtained. Specifically, a water-soluble organic solvent is used as an anti-drying agent that prevents clogging of discharging nozzles, which may be caused due to aggregation generated by adhesion and drying of an ink at an ink ejection orifice. Further, a water-soluble organic solvent may be used as a permeation accelerator that enhances permeability of ink into paper.

As an anti-drying agent, a water-soluble organic solvent having a vapor pressure lower than that of water is preferably used. Specific examples of such a water-soluble organic solvent include: polyhydric alcohols such as those represented by ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, trimethylolpropane, and the like; lower alkyl ethers of a polyhydric alcohol such as ethylene glycol monomethyl ether, ethylene glycol monoethyl ether, diethylene glycol monomethyl ether, diethylene glycol monoethyl ether, triethylene glycol monoethyl ether, and triethylene glycol monobutyl ether; heterocycles such as 2-pyrrolidone, N-methyl-2-pyrrolidone, 1,3-dimethyl-2-imidazolidinone, and N-ethylmorpholine; sulfur-containing compounds such as sulfolane, dimethylsulfoxide, and 3-sulfolene; polyfunctional compounds such as diacetone alcohol and diethanolamine; and urea derivatives.
Among them, polyhydric alcohol such as glycerin and diethylene glycol are preferable as an anti-drying agent.
The anti-drying agents may be used alone or in a combination of two or more of them. The content of the anti-drying agent is preferably from 10% by mass to 50% by mass of the ink composition.

Specific examples of the penetration accelerator, which may be preferably used, include alcohols such as ethanol, isopropanol, butanol, diethylene glycol monobutyl ether, triethylene glycol monobutyl ether, and 1,2-hexanediol; sodium lauryl sulfate; sodium oleate; and nonionic surfactants.
The penetration accelerators may be used alone or in a combination of two or more of them. The content of the penetration accelerator is preferably from 5% by mass to 30% by mass of the ink composition. Further, the penetration accelerator is preferably used within the range of the addition amount such that bleeding of the image or print-through is not caused.

A water-soluble organic solvent can also be used for the purpose of adjusting viscosity, other than the above purposes. Specific examples of the water-soluble organic solvent that can be used for adjusting viscosity include alcohols (for example, methanol, ethanol, propanol, isopropanol, butanol, isobutanol, sec-butanol, t-butanol, pentanol, hexanol, cyclohexanol, and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol), glycol derivatives (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol, monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenyl ether), amines (for example, ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethylpropylenediamine), and other polar solvents (for example, formamide, N,N-dimethylformamide, N,N-dimethylacetamide, dimethylsulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone). Also in this case, one of the water-soluble organic solvents may be used alone, or two or more of them may be used in combination.

### Additional additives

The ink composition in the present invention may includes additional additives, other than the components described above. Examples of the additional additives include known additives such as an anti-drying agent (a wetting agent), a color fading inhibitor, an emulsification stabilizer, a permeation accelerator, an ultraviolet absorbent, an antiseptic, a mildew proofing agent, a pH adjusting agent, a surface tension adjusting agent, an antifoaming agent, a viscosity adjusting agent, a dispersant, a dispersion stabilizer, an anti-rust agent, or a chelating agent.

The ultraviolet absorbent can improve the storability of an image. As the ultraviolet absorbent, benzotriazole compounds described in, for example, JP-A Nos. 58-185677, 61-190537, 2-782, 5-197075, and 9-34057; benzophenone compounds described in, for example, JP-A Nos. 46-2784 and 5-194483, and US Patent No. 3,214,463; cinnamic acid compounds described in, for example, Japanese Patent Application Publication (JP-B) Nos. 48-30492 and 56-21141, and JP-A No. 10-88106; triazine compounds described in, for example, JP-A Nos. 4-298503, 8-53427, 8-239368, and 10-182621, and Japanese National Phase Publication No. 8-501291 may be used. Further, compounds described in Research Disclosure No. 24239, and compounds that absorb ultraviolet rays and emit fluorescence, i.e., fluorescent brighteners, represented by a stilbene compound or a benzoxazole compound may also be used.

The color fading inhibitor can improve the storability of an image. Examples of the color fading inhibitor include various organic color fading inhibitors and metal complex color fading inhibitors. Examples of the organic color fading inhibitors include hydroquinones, alkoxyphenols, dialkoxyphenols, phenols, anilines, amines, indanes, chromanes, alkoxyanilines, and heterocycles, Examples of the metal complex color fading inhibitors include nickel complexes and zinc complexes. More specifically, compounds described in the patents cited in Research Disclosure No. 17643, chapter VII, items I to J; Research Disclosure No. 15162; Research Disclosure No. 18716, page 650, the left-hand column; Research Disclosure No. 36544, page 527; Research Disclosure No. 307105, page 872; and compounds included in the formulae of the representative compounds and the exemplary compounds described on pages 127 to 137 of JP-A No. 62-215272 can be used.

Examples of the mildew proofing agent include sodium dehydroacetate, sodium benzoate, sodium pyridinethione 1-oxide, ethyl p-hydroxybenzoate,
1,2-benzisothiazolin-3-one, and a salt thereof. The content of the mildew proofing agent is preferably in a range of from 0.02% by mass to 1.00% by mass with respect to the ink composition.

As the pH adjusting agent, a neutralizer (organic base or inorganic alkali) may be used. The pH adjusting agent can improve the storage stability of the ink composition.
The pH adjusting agent is preferably added in such amount that the ink composition has the pH of from 6 to 10, and more preferably added in such amount that the ink composition has the pH of from 7 to 10.

Examples of the surface tension adjusting agent include a nonionic surfactant, a cationic surfactant, an anionic surfactant, and a betaine surfactant.
The addition amount of the surface tension adjusting agent is preferably an addition amount that adjusts the surface tension of the ink composition to a range of from 20 mN/m to 60 mN/m, more preferably an addition amount that adjusts the surface tension of the ink composition to a range of from 20 mN/m to 45 mN/m, and stull more preferably an addition amount that adjusts the surface tension of the ink composition to a range of 25 mN/m to 40 mN/m. When the addition amount is within the above range, the ink droplets can be satisfactorily spotted by ink-jetting.

Specific examples of the surfactant as a hydrocarbon type surfactant preferably include: anionic surfactants such as a fatty acid salt, an alkyl sulfate ester salt, an alkylbenzenesulfonic acid salt, an alkylnaphthalenesulfonic acid salt, a dialkylsulfosuccinic acid salt, an alkyl phosphate ester salt, a naphthalenesulfonic acid-formalin condensate, and a polyoxyethylene alkyl sulfate ester salt; and nonionic surfactants such as polyoxyethylene alkyl ether, polyoxyethylene alkyl allyl ether, polyoxyethylene fatty acid ester, sorbitan fatty acid ester, polyoxyethylene sorbitan fatty acid ester, polyoxyethylene alkyl amine, glycerin fatty acid ester, and oxyethylene-oxypropylene block copolymer. Further, OLFINES (trade name, manufactured by Nisshin Chemical Industry Co., Ltd.) and SURFYNOLS (trade name, manufactured by Air Products & Chemicals, Inc.), which are acetylene type polyoxyethylene oxide surfactants, are also preferably used. Furthermore, amine oxide type amphoteric
surfactants such as N,N-dimethyl-N-alkylamine oxide are also preferable.
Moreover, compounds described on pages 37 to 38 of JP-A No. 59-157636 and Research Disclosure No. 308119 (1989) as surfactants can also be used.
By using fluorocarbon surfactants (fluoroalkyl type surfactants), silicone surfactants or the like, such as those described in JP-A Nos. 2003-322926, 2004-325707 and 2004-309806, the rub resistance can be improved.

Further, the above surface tension adjusting agent can be used as an antifoaming agent, and fluorocarbon compounds, silicone compounds, chelating agents represented by EDTA (ethylenediaminetetraacetic acid), and the like are also applicable.

### Method for producing ink composition

The method for producing the ink composition according to the present invention is not particularly limited. For example, the method for producing the ink composition includes: a process of preparing a dispersion of colored particles through covering a pigment with a water-insoluble polymer; and a process of mixing at least the dispersion of colored particles, a water-soluble polymer having an anionic group and a cationic group (an amphoteric water-soluble polymer), a water-soluble polymerizable compound, and water to prepare the ink composition. The method for producing the ink composition may further include other processes, as necessary.
The ink composition produced by the above production method may have excellent ejection reliability over a long-term, which is preferable. Further, by using the ink composition, an image having excellent image forming characteristics and excellent rub resistance can be formed, even when the image is formed at a high speed by ink-jetting.

The process of preparing the dispersion of colored particles has the same definition as in the above-described [Method of preparing colored particles], and also preferable embodiments thereof are the same as those described therein. Further, the details of the pigment, water-insoluble polymer, and the like which are used in this process have the same definition as in the above-described [Method of preparing colored particles], and also preferable embodiments thereof are the same as those described therein.
The method of preparing the ink composition includes mixing the dispersion of colored particles, an amphoteric water-soluble polymer, a water-soluble polymerizable compound, and water. In addition to the above components, other components such as a polymerization initiator may be added, as necessary. Mixing may be carried out by using a known disperser or the like.

The ink in the present invention is preferably an ink composition including:
a pigment coated with a water-insoluble vinyl polymer having a hydrophobic constituent unit derived from an aromatic group-containing monomer and a hydrophilic constituent unit containing a carboxylic acid group;
an amphoteric water-soluble polymer which has a structural unit containing a carboxylic acid group and has an acid value (mgKOH/g) of from 80 to 200; and
a water-soluble polymerizable compound which has two or more polymerizable functional groups of at least one type selected from the group consisting of a (meth)acrylamido group, a maleimido group, a vinylsulfone group, and an N-vinylamido group, and has an A value of 175 or less.
Moreover, the ink in the present invention is more preferably an ink composition including:
a pigment coated with a water-insoluble vinyl polymer having a hydrophobic constituent unit derived from an aromatic group-containing monomer and a hydrophilic constituent unit containing a carboxylic acid group;
an amphoteric water-soluble polymer which has a structural unit containing a carboxylic acid group and a structural unit containing an aliphatic tertiary amino group, and has an acid value (mgKOH/g) of from 80 to 200; and
a water-soluble polymerizable compound which has two or more (meth)acrylamido groups, and has an A value of from 84 to 165.

### Treatment liquid

The treatment liquid according to the present invention can be configured to include at least one aggregating agent which is capable of forming an aggregate by contact with components included in the ink composition described above and, as necessary, other components.

Examples of the aggregating agent may include a compound that can change the pH of the ink composition, a polyvalent metal salt, and a polymer having a quaternary or tertiary amine such as polyallylamine. Among them, at least one selected from the group consisting of an acidic compound, a polyvalent metal salt, and a polymer having a quaternary or tertiary amine such as polyallylamine is preferable, and an acidic compound is more preferable.

Preferable examples of the acidic compound include sulfuric acid, hydrochloric acid, nitric acid, phosphoric acid, polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumalic acid, thiophenecarboxylic acid, nicotinic acid, derivatives of these compounds, and salts thereof.
The acidic compounds may be used alone or in a combination of two or more of them.

In a case in which the treatment liquid contains an acidic compound, the pH (at 25°C) of the treatment liquid is preferably 6 or lower, and more preferably 4 or lower.
Above all, the pH (at 25°C) of the treatment liquid is preferably from 0.5 to 4, and particularly preferably from 1 to 3. In this case, the pH (at 25°C) of the ink composition is preferably 7.5 or higher (more preferably, 8.0 or higher).
Specifically, from the viewpoints of image density, resolution, and realizing higher speed in image formation, it is preferable that the pH (at 25°C) of the ink composition is 8.0 or higher and the pH (at 25°C) of the treatment liquid is from 0.5 to 4.

Among the above acidic compounds, an acidic compound having a high water solubility is preferable. Further, from the viewpoints of enhancing the aggregation properties and fixing the whole ink, phosphoric acid or an organic acid is preferable, an organic acid is more preferable, an organic acid having a valency of 2 or more is still more preferable, and an organic acid having a valency of from 2 to 3 is particularly preferable. Among the organic acids having a valency of 2 or more, an organic acid having a first pKa of 3.5 or lower is preferable, and an organic acid having a first pKa of 3.0 or lower is more preferable. Specifically, preferable examples include oxalic acid, malonic acid, and citric acid.

Examples of the polyvalent metal salt may include salts of an alkaline earth metal belonging to Group 2 of the periodic table (for example, magnesium or calcium), salts of a transition metal belonging to Group 3 of the periodic table (for example, lanthanum), and salts of a cation from an element belonging to Group 13 of the periodic table (for example, aluminum), salts of a lanthanide (for example, neodium). As the salts of a metal, carboxylic acid salts (for example, formic acid salts, acetic acid salts, benzoic acid salts, or the like), nitric acid salts, chlorides, and thiocyanic acid salts are preferable. Among them, a calcium salt or magnesium salt of a carboxylic acid (for example, a salt of formic acid, acetic acid, benzoic acid, or the like), a calcium salt or magnesium salt of nitric acid, calcium chloride, magnesium chloride, and a calcium salt or magnesium salt of thiocyanic acid are more preferable.

The aggregating agents may be used alone, or two or more of them may be used by mixing them.
The content of the aggregating agent in the treatment liquid is preferably from 1% by mass to 50% by mass, more preferably from 3% by mass to 45% by mass, and still more preferably from 5% by mass to 40% by mass.

In the ink set of the present invention, it is preferable that at least one of the ink composition or the treatment liquid contains at least one polymerization initiator.
The polymerization initiator that may be contained in the treatment liquid has the same definition as that described in the above item entitled "ink composition", and specific examples and preferable embodiments are also the same as those described therein.

The treatment liquid in the present invention can further contain additional components within a range that the effects of the invention are not impaired. Examples of the additional components include known additives such as an anti-drying agent (a wetting agent), a color fading inhibitor, an emulsification stabilizer, a permeation accelerator, an ultraviolet absorbent, an antiseptic, a mildew proofing agent, a pH adjusting agent, a surface tension adjusting agent, an antifoaming agent, a viscosity adjusting agent, a dispersant, a dispersion stabilizer, an anti-rust agent, or a chelating agent.

As the ink set of the present invention, a combination of the preferable ink composition described above and a treatment liquid containing an organic acid as the aggregating agent is preferable. Further, a combination of the preferable ink composition described above and a treatment liquid containing an organic acid having a valency of two or more as the aggregating agent is more preferable.

### Image forming method

The image forming method of the present invention uses the above ink set of the invention, and includes: an ink applying process of applying the ink composition in the above ink set onto a recording medium by ink jetting; and a treatment liquid applying process of applying the treatment liquid in the above ink set, onto the recording medium. The image forming method of the invention may further include other processes, as necessary. It is preferable that the image forming method of the invention includes an active energy irradiating process of irradiating the ink composition that has been applied onto the recording medium, with an actinic energy ray. It is more preferable that the image forming method of the invention includes an ultraviolet ray irradiating process of irradiating with an ultraviolet ray as the actinic energy ray.

In the image forming method of the present invention, the pigment and/or the polymer included in the ink composition and the aggregating agent included in the treatment liquid are brought into contact on the recording medium, thereby forming an aggregate and, as a result, an image is fixed, and at the same time, the water-soluble polymerizable compound included in the ink composition is polymerized and cured in a state of being incorporated into a space among the pigment and/or polymer particles, whereby the strength of the image may be enhanced.
In other words, by the use of the treatment liquid, components included in the ink composition are aggregated rapidly, and as a result, the qualities of image (for example, the hue, the image forming characteristics, and the like) are improved, while the polymerizable compound enters, to an appropriate extent, into a space among the pigment and/or polymer particles which are in an aggregated state. Since the polymerizable compound is polymerized and cured in this state, it becomes possible to enhance the strength of the image, and also the rub resistance of the image can be enhanced.

### Ink applying process

In the ink applying process in the present invention, the ink composition, which contains a pigment coated with a water-insoluble polymer, a water-soluble polymer having an anionic group and a cationic group, a water-soluble polymerizable compound, and water, is applied onto a recording medium by ink jetting. The details and preferable embodiments of the ink composition used in this process are as described above on the ink set of the present invention.

The method for ink jetting is not particularly limited, and may be a known method. Examples thereof include: a charge control method in which an ink is ejected by using an electrostatic attraction force; a drop-on-demand method (pressure pulse method) in which a vibration pressure of a piezo element is used; an acoustic inkjet method in which an electric signal is converted into an acoustic beam and an ink is irradiated with the acoustic beam so as to be ejected by using the radiation pressure; and a thermal inkjet (BUBBLE JET (registered trademark)) method in which an ink is heated to form bubbles and the resulting pressure is used. As the method for ink jetting, the ink jetting method described in JP-A No. 54-59936, in which thermal energy is applied to an ink, the ink volume changes drastically, and by using the force caused by this change, the ink is ejected from the nozzle, may be effectively used.
It should be noted that the above method for ink jetting includes, in its scope, a method of discharging a number of droplets of an ink having low concentration, which is referred to as photo ink, each at a small volume; a method of improving the image quality by using plural inks which have substantially the same hue but different concentrations; and a method of using colorless and transparent ink.

The inkjet head used for ink jetting may be either an on-demand type head or a continuous type head. Examples of ejection systems include electromechanical transduction systems (for example, a single-cavity system, a double-cavity system, a vendor system, a piston system, a share-mode system, a shared-wall system, and the like), electrothermal transduction systems (for example, a thermal inkjet system, a BUBBLE JET (registered trademark) system, and the like), electrostatic suction systems (for example, an electric field control system, a slit jet system, and the like), and discharge systems (for example, a spark jet system and the like), and any of these ejection systems can be employed.
The ink nozzles and the like are not particularly limited, and may be selected as appropriate according to the purposes.

Examples of the method for ink jetting include a shuttle method in which a short serial head is used and recording is performed while allowing the head to scan in the width direction of a recording medium, and a line method using a line head in which recording elements are arranged corresponding to the whole region for one side of a recording medium. In the line method, an image can be recorded over the whole surface of the recording medium by allowing the recording medium to scan in the direction being at right angles to the arranging direction of the recording elements, in which a conveyance system such as a carriage by which the short head moves for scanning is not necessary. Further, in the line method, since complicated scanning control for the movement of the carriage and the recording medium is not necessary and only the recording medium moves, a higher recording speed can be realized as compared with the shuttle system. The image forming method of the present invention is applicable to any one of them; however, in a case in which the image forming method is applied to the line method in which dummy jetting is not generally carried out, effects in improving the ejection accuracy and rub resistance of an image may be larger.

The amount of the liquid droplet of the ink ejected from the inkjet head is preferably from 1 pL (picoliter) to 10 pL, and more preferably from 1.5 pL to 6 pL, from the viewpoint of obtaining high accuracy images. Further, it is effective to eject ink droplets with different liquid droplet amounts in combination, from the viewpoints of suppression of unevenness in an image and improvement in successive gradation continuity. The present invention can be preferably employed even in such an embodiment.

In the present invention, a heating and drying process may be provided, in which at least a portion of the solvent in the ink composition that has been applied in the ink applying process is removed by drying.
Heating and drying can be carried out by a known heating unit such as a heater, an air blow unit utilizing air which is blown from a dryer or the like, or a combination of these units. Examples of a heating method include a method of applying heat by using a heater or the like from the opposite side of the recording medium to the surface applied with the ink, a method of blowing a warm air or hot air to the surface of the recording medium applied with the ink, and a method of heating using an infrared heater. Heating may also be performed by using two or more of these methods in combination.

### Treatment liquid applying process

In the treatment liquid applying process, a treatment liquid containing an aggregating agent, which is capable of forming an aggregate by contact with the components of the ink composition, is applied onto a recording medium. Details and preferable embodiments of the treatment liquid used in this process are as described above on the ink set of the invention.

Application of the treatment liquid may be performed in accordance with a known method such as a coating method, an inkjet method, or an immersion method. The coating may be performed by a known coating method using a bar coater, an extrusion die coater, an air doctor coater, a blade coater, a rod coater, a knife coater, a squeeze coater, a reverse roll coater, or the like. Details of the method for ink jetting are as described above.

The treatment liquid applying process may be provided before or after the ink applying process. In the present invention, an embodiment in which the ink applying process is provided after the treatment liquid applying process is preferable. Specifically, an embodiment is preferable, in which, before applying the ink composition onto the recording medium, the treatment liquid for aggregating the pigment and/or the polymer particles in the ink composition is applied in advance onto the recording medium, and the ink composition is applied so as to be in contact with the treatment liquid that has been applied onto the recording medium. Thereby, inkjet recording may be speeded up, and even when high speed recording is performed, an image having high density and high resolution may be obtained.

The amount of the treatment liquid to be applied is not particularly limited as long as the amount is enough to aggregate the ink composition. The amount of the treatment liquid to be applied is preferably such that the amount of the aggregating agent applied is adjusted to be 0.1 g/m² or more. The amount of the treatment liquid to be applied is more preferably such that the amount of the aggregating agent applied is adjusted to be from 0.2 g/m² to 0.7 g/m². When the amount of the aggregating agent applied is 0.1 g/m² or more, satisfactory high-speed aggregation properties may be maintained according to the various usage forms of the ink composition. The amount of the aggregating agent applied of 0.7 g/m² or less is preferable in view of not exerting adverse influences (for example, change in gloss or the like) on the surface properties of the recording medium to which the treatment liquid has been applied.

In the present invention, it is preferable to provide the ink applying process after the treatment liquid applying process, and to further provide a heating and drying process of heating and drying the treatment liquid on the recording medium during a period from after the application of the treatment liquid onto the recording medium to the application of the ink composition. By heating and drying the treatment liquid prior to the ink applying process, ink coloring properties including prevention of bleeding may be improved, and recording of a visible image having satisfactory color density and satisfactory hue may be realized.

The heating and drying can be carried out by a known heating unit such as a heater, an air blow unit utilizing air which is blown from a dryer or the like, or a combination of these units. Examples of a heating method include a method of applying heat by a heater or the like from the opposite side of the recording medium to the surface applied with the treatment liquid, a method of blowing a warm air or hot air to the surface of the recording medium applied with the treatment liquid, and a method of heating using an infrared heater. Heating may also be performed by using two or more of these methods in combination.

### Actinic energy ray irradiating process

It is preferable that the image forming method of the present invention includes a process of irradiating the ink composition applied onto a recording medium, with an actinic energy ray. By performing the actinic energy ray irradiating process, the rub resistance and blocking resistance of an image are more effectively improved. The actinic energy ray irradiating process is preferably an ultraviolet ray irradiating process of irradiating with ultraviolet rays as the actinic energy ray.

In the actinic energy ray irradiating process, when the ink composition is irradiated with an actinic energy ray, the polymerizable compound included in the ink composition is allowed to undergo polymerization and thus, a cured film containing a pigment may be formed. In a case in which at least one of the ink composition or the treatment liquid contains a polymerization initiator, the polymerization initiator is allowed to decompose due to the irradiation of an actinic energy ray, thereby generating initiation species such as radicals, acid, base, or the like. By the action of the initiation species, the polymerization reaction of the polymerizable compound is initiated and promoted and, as a result, a cured film is formed more effectively.

As the actinic energy ray used in the actinic energy ray irradiating process, α ray, y ray, electron beam, X ray, ultraviolet ray, visible ray, infrared ray, or the like may be used. The wavelength of the actinic energy ray is, for example, preferably from 200 nm to 600 nm, more preferably from 300 nm to 450 nm, and still more preferably from 350 nm to 420 nm.
The output of the actinic energy ray is preferred to be 5,000 mJ/cm² or less, more preferably from 10 mJ/cm² to 4,000 mJ/cm², and still more preferably from 20 mJ/cm² to 3,000 mJ/cm².

As the actinic energy ray source, a mercury lamp, a gas laser, a solid laser, or the like has been mainly utilized. As the light source used for curing of ultraviolet ray photo-curing type inks, a mercury lamp and a metal halide lamp are widely known. However, nowadays, mercury free is strongly required from the viewpoint of the environmental protection, and replacement with GaN-based semiconductor ultraviolet ray emitting devices is industrially and environmentally very useful.
Moreover, a light emitting diode (LED) and a laser diode (LD) are compact, have high durability and high efficiency, and are inexpensive, and thus are expected to be used as a light source for photo-curing type ink. In a case in which an ultraviolet ray source is needed, an ultraviolet LED or an ultraviolet LD can be used. For example, an ultraviolet LED that mainly emits a spectrum having a wavelength within a range of from 365 nm to 420 nm is commercially available from Nichia Corporation. Particularly, in the present invention, the actinic energy ray source is preferably an ultraviolet LED, and an ultraviolet LED having a peak wavelength within a range of from 350 nm to 420 nm is particularly preferable.

### Recording medium

The recording medium used in the image forming method of the present invention is not particularly limited, and general printing paper which is used in general offset printing and includes cellulose as a main component, paper used exclusively for inkjet recording, paper used exclusively for photos, common use paper for electrophotography, films, clothes, glass, metals, ceramics, or the like can be used.

Among the recording media, a so-called coated paper which is used in general offset printing and the like is preferable. Coated paper has a coating layer provided by coating with a coat material on the surface of paper, such as wood free paper, acid free paper, or the like, which includes cellulose as a main component and generally has not been subjected to a surface treatment. In conventional inkjet recording using an aqueous ink, absorption and drying of the ink on the coated paper are relatively slow, and therefore, the coated paper is likely to cause problems in product quality such as the color densities, gloss of images, or rub resistance of images. In contrast, according to the image forming method of the present invention, an image having satisfactory color densities, glossiness, and rub resistance can be obtained. Particularly, it is preferable to use a coated paper having a base paper provided thereon a coating layer containing an inorganic pigment, and it is more preferable to use a coated paper having a base paper provided thereon a coating layer containing kaolin and/or calcium bicarbonate. More specifically, an art paper, a coated paper, a light weight coated paper, or a very light-weight coated paper is more preferable.

Commercially-available products may be used for the coated paper, and examples thereof include: art paper (A1) such as "OK KINFUJI PLUS" (trade name, manufactured by Oji Paper Co., Ltd.) and "TOKUBISHI ART" (trade name, manufactured by Mitsubishi Paper Mills, Ltd.); coated paper (A2, B2) such as "OK TOPCOAT PLUS" (trade name, manufactured by Oji Paper Co., Ltd.) and "AURORA COAT" (trade name, manufactured by Nippon Paper Industries Co., Ltd.); matt coated paper such as "U-LITE" (trade name, manufactured by Nippon Paper Industries Co., Ltd.); light weight coated paper (A3) such as "OK COAT L" (trade name, manufactured by Oji Paper Co., Ltd.) and "AURORA L" (trade name, manufactured by Nippon Paper Industries Co., Ltd.); and very light-weight coated paper such as "OK EVER LITE COATED" (trade name, manufactured by Oji Paper Co., Ltd.) and "AURORA S" (trade name, manufactured by Nippon Paper Industries Co., Ltd.).

### Inkjet recording apparatus

An example of an inkjet recording apparatus which is suitable for carrying out the ink jetting in the image forming method of the invention will be specifically explained with reference to Fig. 1. Fig. 1 is a schematic diagram showing an example of the configuration of the whole of an inkjet recording apparatus.

As shown in Fig. 1, the inkjet recording apparatus includes: a treatment liquid application unit 12 equipped with a treatment liquid ejection head 12S that ejects the treatment liquid; a treatment liquid drying zone 13 equipped with a heating means (not shown) that dries the applied treatment liquid; an ink ejection unit 14 that ejects various ink compositions; and an ink drying zone 15 at which the ejected ink composition is dried, in this order in the conveying direction of the recording medium (the direction indicated by an arrow in the Figure). Further, an ultraviolet ray irradiation unit 16 equipped with an ultraviolet ray irradiating lamp 16S is provided at the downstream side of the ink drying zone 15 in the recording medium conveying direction.

The recording medium that has been fed to the inkjet recording apparatus is conveyed by conveyance rollers, from a paper feeding unit that feeds the recording medium, via the treatment liquid application unit 12, the treatment liquid drying zone 13, the ink ejection unit 14, the ink drying zone 15, and the ultraviolet ray irradiation unit 16 in this order, to an accumulation section and is accumulated in the accumulation section. The conveyance of the recording medium may also be conducted by a method other than the method using conveyance rollers, and examples of the other method include a drum conveyance method using a drum-shaped member, a belt conveyance method, and a stage conveyance method using a stage.

Among the plural conveyance rollers provided in the inkjet recording apparatus, at least one roller may be a drive roller to which the motive power of a motor (not shown) is transmitted. By rotating the drive roller that rotates by using the motor at a constant rate, the recording medium is conveyed in a predetermined direction at a predetermined conveyance amount.

The treatment liquid application unit 12 is provided with the treatment liquid ejection head 12S which is connected to a storage tank that stores the treatment liquid. The treatment liquid ejection head 12S ejects the treatment liquid from ejection nozzles arranged to face the recording face of the recording medium, and thus liquid droplets of the treatment liquid can be applied onto the recording medium. The method used in the treatment liquid application unit 12 is not limited to the method of ejecting from a head in the form of a nozzle, and may be a method of coating using a coating roller. According to this coating method, the treatment liquid can be readily applied to almost the entire surface of the recording medium including the image region onto which ink droplets are to be spotted by the ink ejection unit 14 which is arranged at the downstream side. In order to adjust the thickness of the treatment liquid on the recording medium to be uniform, for example, a method of using an air knife, a method of providing a member having an acute angle to give a gap, which corresponds to the specified amount of the treatment liquid, between the member and the recording medium, or the like may be used.

The treatment liquid drying zone 13 is arranged at the downstream side of the treatment liquid application unit 12 in the recording medium conveying direction. The treatment liquid drying zone 13 is configured to include a known heating means such as a heater, an air blow means utilizing air which is blown from a dryer or the like, or a means combining these. Examples of a heating method include a method of disposing a heating element such as a heater or the like at the opposite side of the recording medium to the surface applied with the treatment liquid (for example, in a case in which the recording medium is conveyed automatically, the heating element may be disposed below the conveyance system that conveys the recording medium placed thereon), a method of blowing a warm air or hot air to the treatment liquid applying face of the recording medium, and a method of heating using an infrared heater. Heating may also be performed by using two or more of these methods in combination.

Since the surface temperature of the recording medium may change depending on the type (material, thickness, or the like) of the recording medium, the environmental temperature, or the like, it is preferable to form a layer of the applied treatment liquid while controlling the temperature by a control system installed in the inkjet recording apparatus. The control system includes a measurement portion that measures the surface temperature of the recording medium, and a heating control portion. In the control system, feedback of the value of the surface temperature of the recording medium, which is measured in the measurement portion, to the heating control portion is conducted. As for the measurement portion that measures the surface temperature of the recording medium, a contact type thermometer or a non-contact type thermometer is preferred.
Further, removal of the solvent may be carried out by using a solvent removing roller or the like. As another embodiment, a method of removing excess solvent from the recording medium by using an air knife may also be used.

The ink ejection unit 14 is arranged at the downstream side of the treatment liquid drying zone 13 in the recording medium conveying direction. The ink ejection unit 14 includes recording heads (ink ejection heads) 30K, 30C, 30M, and 30Y. which are each connected with ink storage units that store inks of black (K), cyan (C), magenta (M), and yellow (Y), respectively. Each ink storage unit (not shown) stores an ink composition containing a pigment of a corresponding hue, and when recording of an image is performed, the ink compositions are supplied to the respective ink ejection heads 30K, 30C, 30M, and 30Y according to the needs. Moreover, as shown in Fig. 1, recording heads 30A and 30B that eject inks of specific colors can be further provided at the downstream side of the ink ejection heads 30K, 30C, 30M, and 30Y in the conveying direction, such that inks of specific colors can be ejected according to the needs.

The ink ejection heads 30K, 30C, 30M, and 30Y eject inks, in a manner such that each of the inks corresponds to the image to be formed, through discharge nozzles that are arranged so as to face the recording face of the recording medium. In this way, inks of the respective colors are applied onto the recording face of the recording medium, whereby a color image is recorded.

The treatment liquid ejection head 12S and the ink ejection heads 30K, 30C, 30M, 30Y, 30A, and 30B are each in the form of a full line head in which a number of discharge ports (nozzles) are aligned along the maximum recording width of the image to be recorded on the recording medium. By this configuration, image recording can be carried out on the recording medium at a higher speed, as compared with a serial type recording method in which the recording is performed while scanning by moving the short shuttle head back and forth along the width direction of the recording medium (along the direction orthogonal to the conveying direction in the recording medium conveyance plane). In the present invention, either of the serial type recording method or a method capable of recording at a relatively high speed, for example, a method of recording an image by ejection in the main scanning direction in accordance with a single pass type method that forms one line by one scanning movement, may be adopted. According to the image forming method of the present invention, a high grade image having high reproducibility can be obtained, even by the single pass method.

Here, all of the treatment liquid ejection head 12S and the ink ejection heads 30K, 30C. 30M, 30Y, 30A, and 30B have the same structure.

The amount of the treatment liquid to be applied and the amount of the ink compositions to be applied are preferably adjusted in accordance with the necessity. For example, the amount of the treatment liquid to be applied may be changed according to the recording medium, in order to, for example, adjust physical properties such as viscoelasticity or the like of the aggregates which are formed when the treatment liquid contacts with the ink composition.

The ink drying zone 15 is arranged at the downstream side of the ink ejection unit 14 in the recording medium conveying direction. The ink drying zone 15 can be configured similarly to the treatment liquid drying zone 13.

The ultraviolet ray irradiation unit 15 is arranged at the downstream side of the ink drying zone 15 in the recording medium conveying direction. In the ultraviolet ray irradiation unit 16, ultraviolet ray is emitted from the ultraviolet ray irradiating lamp 16S provided in the ultraviolet ray irradiation unit 16, thereby polymerizing and curing the polymerizable compound contained in the image that has been subjected to drying. The ultraviolet ray irradiating lamp 16S is a lamp which is disposed so as to face the recording face of the recording medium and with which the entire recording face is irradiated to carry out curing of the entire image. The lamp used in the ultraviolet ray irradiation unit 16 is not limited to the ultraviolet ray irradiating lamp 16S, and a halogen lamp, a high pressure mercury lamp, a laser, an LED, an electron beam irradiation apparatus, or the like can also be used.
The ultraviolet ray irradiation unit 16 may be provided either at the upstream side or at the downstream side of the ink drying zone 15 in the recording medium conveying direction.

The inkjet recording apparatus may further include a heating means, that performs heating treatment on the recording medium, at the conveying path from the paper feeding section to the accumulation section. The heating means may be provided at a desired position, for example, at the upstream side of the treatment liquid drying zone 13, between the ink ejection unit 14 and the ink drying zone 15, or the like. By providing the heating means as such, the temperature of the recording medium may be raised to a desired temperature, and thus, it is possible to perform drying and fixing effectively.

### EXAMPLES

Hereinafter, the present invention is specifically described with reference to Examples, but the scope of the present invention is not limited to these Examples. Unless stated otherwise, the "parts" and "%" are based on mass.

### Preparation of Cyan Pigment Dispersion A

### Synthesis of Polymer Dispersant P-1

88 g of methyl ethyl ketone was placed in a 1000 mL three-necked flask equipped with a stirrer and a condenser tube, and was heated to 72°C under a nitrogen atmosphere. Then, a solution obtained by dissolving 0.85 g of dimethyl 2,2'-azobisisobutyrate, 60 g of benzyl methacrylate, 10 g of methacrylic acid, and 30 g of methyl methacrylate in 50 g of methyl ethyl ketone was added thereto dropwise over 3 hours. After the addition was completed, the mixture was further allowed to react for one hour, and then a solution obtained by dissolving 0.42 g of dimethyl 2,2'-azobisisobutyrate in 2 g of methyl ethyl ketone was added thereto. The temperature of the resulting mixture was elevated to 78°C, and the mixture was heated for 4 hours. The obtained reaction liquid was reprecipitated twice with an excess of hexane. The separated resin was dried, to obtain 96 g of polymer dispersant P-1 (benzyl methacrylate/ methacrylic acid/ methyl methacrylate = 60/ 10/ 30 [mass ratio]).
The composition of the obtained resin was confirmed by ¹H-NMR, and the weight average molecular weight (Mw) determined by GPC was 44,600. Further, the acid value determined according to the method described in JIS (JIS K 0070 : 1992, which is incorporated herein by reference) was 65.2 mgKOH/g.

### Preparation of Resin Coated Pigment Dispersion

12 parts of Pigment Blue 15:3 (trade name: PHTHALOCYANINE BLUE A220, manufactured by Dainichiseika Color & Chemicals Mfg. Co., Ltd.), 6 parts of the above polymer dispersant P-1, 42 parts of methyl ethyl ketone, 6.3 parts of a 1 mol/L aqueous solution of NaOH (sodium hydroxide), and 83.7 parts of ion exchanged water were mixed, and dispersed for 2 hours to 6 hours using a bead mill with zirconia beads having a diameter of 0.1 mm. From the resulting dispersion, methyl ethyl ketone was removed under a reduced pressure at 55°C, and further a portion of water was removed. In this way, dispersion A (pigment concentration of 12%) as a dispersion of a cyan pigment (colored particles) coated with the polymer dispersant P-1 was obtained.

### Preparation of Cyan Pigment Dispersion B for comparison

12 parts of Pigment Blue 15: 3 (trade name: PHTHALOCYANINE BLUE A220, manufactured by Dainichiseika Color & Chemicals Mfg. Co., Ltd.), 6 parts of polyvinyl pyrrolidone (trade name: K30, manufactured by Wako Pure Chemical Industries, Ltd.), and 82 parts of ion exchanged water were mixed, and dispersed for 2 hours to 6 hours using a bead mill with zirconia beads having a diameter of 0.1 mm. In this way, dispersion B (pigment concentration of 12%) as a dispersion of a cyan pigment (colored particles) coated with polyvinyl pyrrolidone was obtained. It should be noted that polyvinyl pyrrolidone is a polymer that is not included in the water-insoluble polymers according to the present invention.

### Preparation of Amphoteric Water-Soluble Polymer

### Synthesis of Polymer A

59.11 g of dipropylene glycol was placed in a 500 mL three-necked flask equipped with a stirrer and a condenser tube, and was heated to 84°C under a nitrogen atmosphere. Then, a solution obtained by dissolving 2.63 g of dimethyl 2,2'-azobisisobutyrate, 5.97 g of (N,N-dimethylamino)ethyl methacrylate, 7.85 g of methacrylic acid, 19.34 g of dodecyl methacrylate, and 17.50 g of methyl methacrylate in 59.11 g of dipropylene glycol was added thereto dropwise over 3 hours. After the addition was completed, the mixture was further allowed to react for one hour. Then, a solution obtained by dissolving 0.5 g of dimethyl 2,2'-azobisisobutyrate in 2 g of dipropylene glycol was added thereto, and the mixture was heated for 3 hours. Thereafter, the resulting solution was air-cooled, and then 7.42 g of a 50% aqueous solution of potassium hydroxide was added thereto to neutralize the polymer. The obtained reaction liquid was reprecipitated twice with an excess of hexane. The separated polymer was dried, to obtain 49.5 g of polymer A.
The composition of the obtained polymer A was confirmed by ¹H-NMR. The weight average molecular weight (Mw) was determined by GPC, and the acid value (mgKOH/g) was determined according to the method described in JIS (JIS K 0070: 1992, which is incorporated herein by reference). Details of the polymer A are as follows.

### Polymer A

(N,N-dimethylamino)ethyl methacrylate/ methacrylic acid/ dodecyl methacrylate/ methyl methacrylate = 11.8/ 15.5/ 38.2/ 34.5 [mass ratio]
Weight average molecular weight (Mw) = 16,000
Acid value (mgKOH/g) = 101

### Synthesis of Polymer B, C, and D

Other amphoteric water-soluble polymers in the present invention can be synthesized in a manner substantially similar to that in the synthesis of the polymer A, except that the monomers and their ratios are changed. The molecular weight can be adjusted by adjusting the addition amount of dimethyl 2,2'-azobisisobutyrate as a polymerization initiator.
As described above, the following polymers B, C, and D were synthesized according to the synthesis method of the polymer A.

### Polymer B

(N,N-dimethylamino)ethyl methacrylate/ methacrylic acid/ dodecyl methacrylate/ methyl methacrylate = 17/ 15.5/ 38.2/ 29.3 [mass ratio]
Weight average molecular weight (Mw) = 12,000
Acid value = 101

### Polymer C

(N,N-dimethylamino)ethyl methacrylate/ methacrylic acid/ dodecyl methacrylate/ methyl methacrylate = 11.8/ 20/ 38.2/ 30 [mass ratio]
Weight average molecular weight (Mw) = 10,000
Acid value = 130

### Polymer D

M-1 / methacrylic acid/ dodecyl methacrylate/ methyl methacrylate = 11.8/ 15.5/ 38.2/ 34.5 [mass ratio]
Weight average molecular weight (Mw) = 12,000
Acid value (mgKOH/g) = 101
It should be noted that M-1 is identical to the Exemplified compound M-1 described in the item entitled "Amphoteric water-soluble polymer".

### Preparation of Ink Compositions 1 to 15

The components shown in the following Table 1 were mixed, and filtrated through a membrane filter (pore diameter of 5 µm). In this way, ink compositions 1 to 15 were prepared.

**TABLE 1**

| | Ink Composition | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| Cyan Pigment Dispersion A (solids) | 4% | 4% | 4% | 4% | 4% | 4% | 4% | 4% | 4% | 4% | 4% | - | 4% | 4% | - |
| Cyan Pigment Dispersion B (solids) | - | - | - | - | - | - | - | - | - | - | - | 4% | - | - | 4% |
| Polymer A (solids) | 2% | 2% | 2% | 2% | 2% | 2% | 2% | - | - | - | - | - | 2% | - | 2% |
| Polymer B (solids) | - | - | - | - | - | - | - | 2% | - | - | - | - | - | - | - |
| Polymer C (solids) | - | - | - | - | - | - | - | - | 2% | - | - | - | - | - | - |
| Polymer D (solids) | - | - | - | - | - | - | - | - | - | 2% | - | - | - | - | - |
| Polymerizable Compound A | 18% | - | - | - | - | - | - | - | - | - | 18% | 18% | - | - | - |
| Polymerizable Compound 1 | - | 18% | - | - | - | - | - | - | - | - | - | - | - | - | - |
| Polymerizable Compound 2 | - | - | 18% | - | - | - | - | 18% | 18% | 18% | - | - | - | 18% | 18% |
| Polymerizable Compound 3 | - | - | - | 18% | - | - | - | - | - | - | - | | - | | - |
| Polymerizable Compound 4 | - | - | - | - | 18% | - | - | - | - | - | - | - | - | - | - |
| Polymerizable Compound 5 | - | - | - | - | - | 18% | - | - | - | - | - | - | - | - | - |
| Polymerizable Compound 6 | - | - | - | - | - | - | 18% | - | - | - | - | - | - | - | - |
| Polymerization Initiator | 2.5% | 2.5% | 2.5% | 2.5% | 2.5% | 2.5% | 2.5% | 2.5% | 2.5% | 2.5% | 2.5% | 2.5% | - | 2.5 % | 2.5% |
| Glycerin | 3% | 3% | 3% | 3% | 3% | 3% | 3% | 3% | 3% | 3% | 3% | 3% | 3% | 3% | 3% |
| OLFINE E1010 | 1% | 1% | 1% | 1% | 1% | 1% | 1% | 1% | 1% | 1% | 1% | 1% | 1% | 1% | 1% |
| Ion Exchanged Water | amount to give 100% in total | | | | | | | | | | | | | | |

Polymerizable compound A and polymerizable compounds I to 6 in the above Table I are compounds represented by the structural formulae described below, and all of them are water-soluble compounds. Further, the polymerization initiator is IRGACURE 2959 (trade name, manufactured by Ciba Specialty Chemicals; photopolymerization initiator).

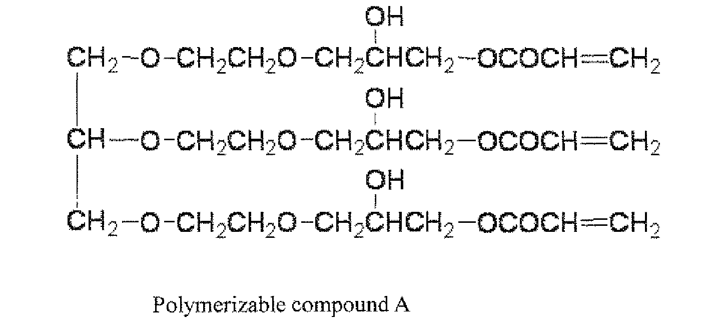

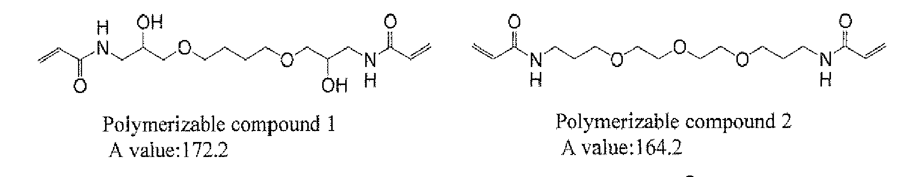

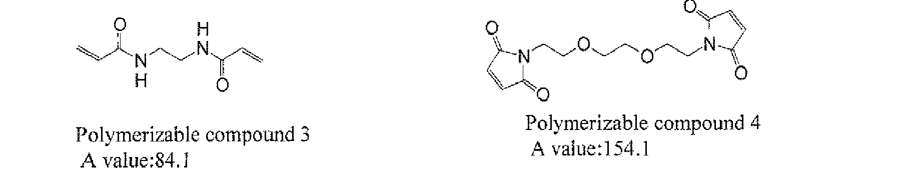

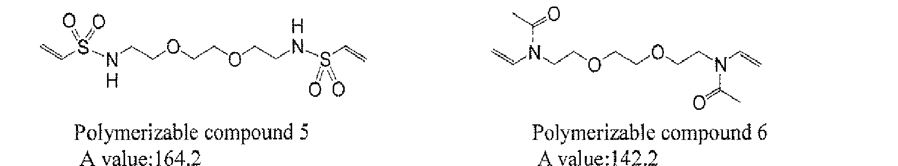

### Preparation of Treatment Liquid 1

The components shown in the following "Composition of Treatment Liquid 1" are mixed to prepare treatment liquid 1. The pH (at 25°C) of the treatment liquid 1 measured by using a pH meter WM-50EG (trade name, manufactured by DKK-TOA Corporation) was 1.0.

### Composition of Treatment Liquid 1

| | |
|---|---|
| • Malonic acid (organic acid) | 25.0% |
| • Tripropylene glycol monomethyl ether (water-soluble organic solvent) | 5.0% |
| • Ion exchanged water | 70.0% |

### Example 1

### Preparation of Ink Set 1

The ink composition 1 and the treatment liquid 1 were used in combination to prepare ink set 1.

### Image Formation

An inkjet recording apparatus was prepared which includes, as shown in Fig. 1, a treatment liquid application unit 12 equipped with a treatment liquid ejection head 12S, a treatment liquid drying zone 13, ink ejection unit 14, an ink drying zone 15, and an ultraviolet ray irradiation unit 16 equipped with an ultraviolet ray irradiating lamp 16S, in this order in the conveying direction of the recording medium (in the direction indicated by the arrow in the Figure).
Although not shown in the Figure, the treatment liquid drying zone 13 has, on the recording face side of the recording medium, an air blower that supplies dry air so as to perform drying and, on the non-recording face side of the recording medium, an infrared heater. The treatment liquid drying zone 13 is configured such that 70% by mass or more of water in the treatment liquid are vaporized (dried) by regulating the temperature and air volume, during the period until 900 milliseconds have passed after the application of the treatment liquid is started in the treatment liquid application unit 12.
In the ink ejection unit 14, a black ink ejection head 30K, a cyan ink ejection head 30C, a magenta ink ejection head 30M, and a yellow ink ejection head 30Y are disposed in this order in the conveying direction (in the direction indicated by the arrow). Each of the heads is a full line head of 1200 dpi/10 inch in width (driving frequency: 25 kHz, and recording medium conveyance velocity: 530 mm/sec) and is configured so as to record by ejecting inks of respective colors in the main scanning direction according to a single pass method.

The treatment liquid 1 and the ink composition 1 (cyan ink) of the ink set 1 were charged into storage tanks (not shown) which are respectively connected to the treatment liquid ejection head 12S and the cyan ink ejection head 30C of the inkjet recording apparatus. As the recording medium, sheets of "U-LITE" (trade name, manufactured by Nippon Paper Industries, Co., Ltd.; basis weight of 84.9 g/m²) were used.
Image recording was performed as follows. The treatment liquid and the cyan ink were ejected at a resolution of 1200 dpi × 600 dpi and at an ink droplet amount of 3.5 pL, thereby recording a line image or a solid image. In this process, concerning the line image, lines are recorded by ejecting inks in the main scanning direction according to the single pass method, and thus a 1200 dpi line having a width of 1 dot, a 1200 dpi line having a width of 2 dots, and a 1200 dpi line having a width of 4 dots were recorded. Concerning the solid image, the treatment liquid and the cyan ink were ejected on the entire surface of the recording medium, which had been cut into an A5-size, and thus a solid image was recorded. The amount of the treatment liquid applied onto the recording medium was set to be 2 mL/m².

In the image recording, firstly, the treatment liquid was ejected onto the recording medium from the treatment liquid ejection head 12S by a single pass method, and then the treatment liquid was dried in the treatment liquid drying zone 13. The recording medium was controlled to pass through the treatment liquid drying zone 13 during a period on or before the passage of 900 milliseconds from the initiation of the ejection of the treatment liquid. In the treatment liquid drying zone 13, while heating the spotted treatment liquid from the backside (rare side) of the droplet spotted surface such that the film surface temperature reaches from 40°C to 45°C by using an infrared heater, a hot air having a temperature of 120°C was blown to the recording face by using a blower, and in this process, the air volume was adjusted to achieve a predetermined drying amount. Subsequently, the cyan ink was ejected from the cyan ink ejection head 30C by a single pass method to record an image. Thereafter, in a manner substantially similar to the above, drying of the spotted ink was performed in the ink drying zone 15 by blowing a hot air having a temperature of 120°C at a velocity of 5 m/sec for 15 seconds to the recording face by using a blower, while heating the spotted ink from the backside (rare side) of the ink droplet spotted surface by using an infrared heater. After the drying of the image, the image was irradiated with ultraviolet rays in the ultraviolet ray irradiation unit 16, whereby the image was cured.

### Evaluation

Sheets of U-LITE (trade name) on which a line image or a solid image had been formed as described above were used as samples, and evaluation of the samples was performed with respect to the following evaluation terms. The evaluation results are shown in Table 2 below.

### Image Forming Characteristics

With regard to the samples of line image, image forming characteristics were evaluated according to the following evaluation criteria.

### Evaluation Criteria

1: All of the three lines having different widths are uniform on the whole.
2: The line having a width of 1 dot is uniform; however, non-uniformity in the line width, line breaking, or excess liquid deposition is observed at a part of the lines having widths of 2 dots and 4 dots.
3: The line having a width of 1 dot is uniform; however, non-uniformity in the line width, line breaking, or excess liquid deposition is observed on the whole of the lines having widths of 2 dots and 4 dots.
4: Non-uniformity in the line width, line breaking, or excess liquid deposition is conspicuous in all of the three lines having different widths.

### Rub Resistance

The sample of solid image was left to stand under an environment of 25°C and 50%RH for 72 hours. Then, another sheet of U-LITE (trade name) on which an image was not recorded (hereinafter, in this evaluation, referred to as "unused sample") was placed over the solid image of the sample, and they were rubbed mutually 10 times with a load of 200 kg/m². Thereafter, the unused sample and the solid image were visually observed, and were evaluated on the rub resistance according to the following evaluation criteria.

### Evaluation Criteria

1: Color adhesion to the unused sample is not observed, and deterioration of the rubbed solid image is also not observed.
2: Color adhesion to the unused sample is recognized; however, deterioration of the rubbed solid image is not observed.
3: Color adheres to the unused sample, and deterioration of the rubbed solid image is recognized.
4: Color adheres to the unused sample, the rubbed solid image falls off, and the paper surface (surface of the sheet of U-LITE (trade name)) is exposed.

### Ejection Reliability

On an A5-sized sheet of U-LITE (trade name), lines having a width of 1 dot were output from every other nozzle. After the output, the head was left to stand as it was for a predetermined time. Then, on another A5-sized sheet of U-LITE (trade name), lines having a width of 1 dot were output from every other nozzle. The image output was repeated while changing the time to be allowed to stand. The printing circumstances of the output lines before and after the standing were compared. The length of the time to be allowed to stand, after which 30% or more of the nozzles in terms of number were not able to output, was determined, which was used as an index for evaluating ejection reliability. Evaluation on ejection reliability was performed according to the following evaluation criteria. The grades I to 3 in the evaluation criteria are deemed as practically non-problematic.

### Evaluation Criteria

1: The time allowed to stand is 60 minutes or more.
2: The time allowed to stand is from 30 minutes to less than 60 minutes.
3: The time allowed to stand is from 20 minutes to less than 30 minutes.
4: The time allowed to stand is from 10 minutes to less than 20 minutes.
5: The time allowed to stand is less than 10 minutes.

### Examples 2 to 10 and Comparative Examples 1 to 5

The treatment liquid 1 and any one of the ink compositions 2 to 15 were used in combination to prepare ink sets 2 to 15. Using the ink sets 2 to 15, image formation and evaluations on image forming characteristics, rub resistance, and ejection reliability were performed in a manner substantially similar to that in Example 1. The evaluation results are shown in Table 2 below.

### Comparative Example 6

Ink set 16 was prepared using only the ink composition 3. Namely, the ink set 16 does not include a treatment liquid. Using the ink set 16, image formation and evaluations on image forming characteristics, rub resistance, and ejection reliability were performed in a manner substantially similar to that in Example 1, except that application of a treatment liquid was not conducted. The evaluation results are shown in Table 2 below.

**TABLE 2**

| | Ink Set | Cyan Pigment Dispersion | Amphoteric Water-Soluble Polymer | Water-Soluble Polymerizable Compound | Image Forming Characteristics | Rub Resistance | Ejection Reliability |
|---|---|---|---|---|---|---|---|
| Example 1 | 1 | A | Polymer A | Polymerizable compound A | 2 | 2 | 2 |
| Example 2 | 2 | A | Polymer A | Polymerizable compound 1 | 1 | 1 | 1 |
| Example 3 | 3 | A | Polymer A | Polymerizable compound 2 | I | 1 | 1 |
| Example 4 | 4 | A | Polymer A | Polymerizable compound 3 | 1 | 1 | 1 |
| Example 5 | 5 | A | Polymer A | Polymerizable compound 4 | 1 | 1 | 2 |
| Example 6 | 6 | A | Polymer A | Polymerizable compound 5 | 1 | 1 | 2 |
| Example 7 | 7 | A | Polymer A | Polymerizable compound 6 | 1 | 2 | 1 |
| Example 8 | 8 | A | Polymer B | Polymerizable compound 2 | 1 | 1 | 1 |
| Example 9 | 9 | A | Polymer C | Polymerizable compound 2 | 1 | 1 | 1 |
| Example 10 | 10 | A | Polymer D | Polymerizable compound 2 | 1 | 2 | 1 |
| Comparative Example I | 11 | A | - | Polymerizable compound A | 3 | 2 | 2 |
| Comparative Example 2 | 12 | B | - | Polymerizable compound A | 3 | 3 | 3 |
| Comparative Example 3 | 13 | A | Polymer A | - | 3 | 4 | 3 |
| Comparative Example 4 | 14 | A | - | Polymerizable compound 2 | 3 | 2 | 1 |
| Comparative Example 5 | 15 | B | Polymer A | Polymerizable compound 2 | 3 | 3 | 4 |
| Comparative Example 6 | 16 | A | Polymer A | Polymerizable compound 2 | 4 | 4 | 1 |

| | | | | | | | |
|---|---|---|---|---|---|---|---|
| Note): The ink set 16 of Comparative Example 6 does not have a treatment liquid. | | | | | | | |

As shown in Table 2, the ink sets of the present invention exhibited excellent image forming characteristics, excellent rub resistance, and excellent ejection reliability.
All publications, patent applications, and technical standards mentioned in this specification were herein incorporated by reference to the same extent as if each individual publication, patent application, or technical standard was specifically and individually indicated to be incorporated by reference.

## Claims

1. An ink set comprising:
an ink composition comprising a pigment coated with a water-insoluble polymer; a water-soluble polymer having a hydrophobic structural unit (A), a structural unit (B) comprising an anionic group, and a structural unit (C) comprising a basic aliphatic group or a basic aromatic group; a water-soluble polymerizable compound; and water; and
a treatment liquid comprising an aggregating agent which forms an aggregate by contact with the ink composition.

2. The ink set according to claim 1, wherein the polymerizable compound comprises a compound which does not have a dissociative functional group.

3. The ink set according to claim 1 or 2, wherein the polymerizable compound has two or more polymerizable functional groups each selected from the group consisting of a (meth)acrylamido group, a maleimido group, a vinylsulfone group, and an N-vinylamido group, and has a ratio of the molecular weight of the polymerizable compound to the number of the polymerizable functional groups in one molecule thereof (molecular weight/number of polymerizable functional groups) of 175 or less.

4. The ink set according to any one of claims 1 to 3, wherein the polymerizable compound comprises a compound having at least one (meth)acrylamido group.

5. The ink set according to any one of clams 1 to 4, wherein, in the water-soluble polymer, the structural unit (B) comprising an anionic group is a structural unit comprising a carboxylic acid group, a phosphoric acid group, or a sulfonic acid group.

6. The ink set according to any one of claims 1 to 5, wherein, in the water-soluble polymer, the structural unit (B) comprising an anionic group is a structural unit comprising a carboxylic acid group and has an acid value of from 80 mgKOH/g to 200 mgKOH/g.

7. The ink set according to any one of claims 1 to 6, wherein, in the water-soluble polymer, the structural unit (C) comprising a basic aliphatic group or a basic aromatic group is a structural unit comprising an aliphatic tertiary amino group.

8. The ink set according to any one of claims 1 to 7, wherein the water-insoluble polymer comprises a hydrophobic constituent unit and a hydrophilic constituent unit.

9. The ink set according to any one of claims 1 to 8, wherein the water-insoluble polymer comprises a styrene-(meth)acrylic acid copolymer, a styrene-(meth)acrylic acid-(meth)acrylic ester copolymer, a styrene-(meth)acrylic acid-alkyl (meth)acrylate copolymer, a (meth)acrylic ester-(meth)acrylic acid copolymer, a (meth)acrylic ester-(meth)acrylic acid-alkyl (meth)acrylate copolymer, a polyethylene glycol (meth)acrylate-(meth)acrylic acid copolymer, or a styrene-maleic acid copolymer.

10. The ink set according to any one of claims 1 to 9, wherein the aggregating agent comprises an organic acid.

11. The ink set according to any one of claims 1 to 10, wherein the aggregating agent comprises an organic acid having a valency of two or more.

12. The ink set according to any one of claims 1 to 11, wherein at least one of the ink composition or the treatment liquid comprises an initiator that initiates polymerization of the polymerizable compound due to irradiation with an actinic energy ray.

13. An image forming method using the ink set according to any one of claims 1 to 12, the image forming method comprising:
applying the ink composition in the ink set onto a recording medium by ink jetting;
and
applying the treatment liquid in the ink set onto the recording medium.

14. The image forming method according to claim 13, further comprising irradiating the ink composition applied onto the recording medium with an actinic energy ray.

15. The image forming method according to claim 13 or 14, wherein the recording medium comprises a coated paper having a base paper and a coating layer comprising an inorganic pigment provided on the base paper.
